# EUROPÄISCHE PATENTSCHRIFT

(11) **EP 2 783 236 B1**
(45) Veröffentlichungstag und Bekanntmachung des Hinweises auf die Patenterteilung: **09.10.2019**
(21) Anmeldenummer: 12797805.4
(22) Anmeldetag: 21.11.2012
(51) Int. Cl.: G01S 13/93, G08G 1/16, G01S 7/288

(54) **VERFAHREN UND VORRICHTUNG ZUR POSITIONSBESTIMMUNG VON OBJEKTEN MITTELS KOMMUNIKATIONSSIGNALEN SOWIE VERWENDUNG DER VORRICHTUNG**
METHOD AND DEVICE FOR THE POSITION DETERMINATION OF OBJECTS BY MEANS OF COMMUNICATION SIGNALS, AND USE OF THE DEVICE
PROCÉDÉ ET DISPOSITIF POUR DÉTERMINER LA POSITION D'OBJETS AU MOYEN DE SIGNAUX DE COMMUNICATION ET UTILISATION DE CE DISPOSITIF

(30) Priorität: 21.11.2011 DE 102011086697; 01.12.2011 DE 102011087554
(43) Veröffentlichungstag der Anmeldung: 01.10.2014
(73) Patentinhaber: Continental Teves AG & Co. OHG, 60488 Frankfurt am Main (DE)
(72) Erfinder: SCHRÄBLER, Sighard, 61184 Karben (DE); STÄHLIN, Ulrich, 65760 Eschborn (DE); MENZEL, Marc, 35096 Weimar/Lahn (DE)
(86) Internationale Anmeldenummer: PCT/EP2012/073223
(87) Internationale Veröffentlichungsnummer: WO 2013/076136

(56) Entgegenhaltungen:
- DE-A1-102010 029 744
- US-A- 4 733 238
- US-A1- 2007 023 520
- US-A1- 2008 150 699
- US-B1- 6 868 073
- CHRISTIAN STURM ET AL: "Waveform Design and Signal Processing Aspects for Fusion of Wireless Communications and Radar Sensing", PROCEEDINGS OF THE IEEE, IEEE. NEW YORK, US, Bd. 99, Nr. 7, 1. Juli 2011 (2011-07-01), Seiten 1236-1259, XP011367583, ISSN: 0018-9219, DOI: 10.1109/JPROC.2011.2131110
- C STURM ET AL: "Evaluation of beam-forming algorithms for automotive OFDM signal based radar", RADAR CONFERENCE, 2009. EURAD 2009. EUROPEAN, 30 September 2009 (2009-09-30), pages 141-144, XP055555297, Piscataway, NJ, USA ISBN: 978-1-4244-4747-3

## Beschreibung

Die Erfindung betrifft ein Verfahren zur Positionsbestimmung von Objekten mittels Kommunikationssignalen gemäß Oberbegriff von Anspruch 1, eine Vorrichtung zur Positionsbestimmung von Objekten mittels Kommunikationssignalen gemäß Oberbegriff von Anspruch 25 sowie deren Verwendung.

Im Stand der Technik ist es bereits bekannt, Kraftfahrzeuge mit zur Umfelderfassung geeigneten Sensorvorrichtungen auszustatten. Insbesondere Mono- oder Stereokameravorrichtungen, Radarvorrichtungen und Ultraschallvorrichtungen sind bereits in einer Vielzahl von Neufahrzeugen als Seriengrundausstattung vorhanden oder zumindest als Sonderausstattung verfügbar. Weiterhin sind im Stand der Technik drahtlos übertragende Fahrzeug-zu-X-Kommunikationsvorrichtungen bekannt, welche einen Informationsaustausch mit Umgebungsfahrzeugen und umgebender Infrastruktur ermöglichen. Obwohl derartige Fahrzeug-zu-X-Kommunikationsvorrichtungen in Kraftfahrzeugen gegenwärtig noch wenig verbreitet sind, ist im Laufe der nächsten Jahre mit einer raschen Marktdurchdringung zu rechnen, die insbesondere auch durch gesetzliche Regelungen und Vorschriften begünstigt werden wird.

In diesem Zusammenhang ist aus der DE 10 2007 058 192 A1 ein zentrales Steuergerät für mehrere in einem Kraftfahrzeug vorgesehene Assistenzsysteme bekannt, welche zumindest teilweise mit Umfeldsensoren ausgestattet sind, wobei gemäß der DE 10 2007 058 192 A1 auch ein Telematiksystem als Umfeldsensor verstanden wird. Das zentrale Steuergerät ist auf Datenebene mit den einzelnen Assistenzsystemen verbunden und plausibilisiert die Informationen einzelner Umfeldsensoren mittels der Informationen anderer Umfeldsensoren. Z.B. kann die Bildinformation einer Kamera die Abstandsmessung eines Radarsensors bestätigen. Einzelne Sensorinformationen können somit bestätigt werden und liegen redundant vor. Eine derartige Kopplung von Einzelsignalen verschiedener Sensoren ist auch als Sensorfusion bekannt.

Die DE 10 2011 077 998 A1 offenbart ein Verfahren zur Informationsvalidierung einer Fahrzeug-zu-X-Botschaft mittels Umfeldsensorik. Eine Fahrzeug-zu-X-Kommunikationsvorrichtung und die Umfeldsensorik eines Kraftfahrzeugs wirken dabei derart zusammen, dass der Informationsinhalt einer Fahrzeug-zu-X-Information dabei selbst dann zuverlässig mittels der Umfeldsensorik validiert werden, wenn die vorhandenen Umfeldsensoren den von der Fahrzeug-zu-X-Information beschriebenen Informationsinhalt nur kurzfristig bzw. mit ständigen Unterbrechungen erfassen. Somit können Fahrzeug-zu-X-Informationen auch in Situationen mit nur eingeschränkten Umfelderfassungsmöglichkeiten validiert bzw. als nicht ausreichend vertrauenswürdig verworfen werden.

Aus der DE 10 2011 079 052 A1 sind ein Verfahren und ein System zu Validierung einer Fahrzeug-zu-X-Botschaft bekannt. Dabei wird eine drahtlos gesendete Fahrzeug-zu-X-Botschaft von einer mindestens zwei Antennenglieder aufweisenden Antennenanordnung empfangen, wobei die elektromagnetische Feldstärke der Fahrzeug-zu-X-Botschaft wegen unterschiedlicher, richtungsabhängiger Empfangscharakteristiken der Antennenglieder von den Antennengliedern mit unterschiedlichen Leistungsdichten aufgenommen wird. Aus dem Verhältnis der unterschiedlichen Leistungsdichten in den Antennengliedern bestimmt der Empfänger eine relative Position des Senders zum Empfänger. Die Fahrzeug-zu-X-Botschaft enthält außerdem eine auf GPS-Daten basierende absolute Position des Senders, aus welcher der Empfänger der Fahrzeug-zu-X-Botschaft über seine eigene Absolutposition eine weitere relative Position des Senders zum Empfänger berechnet. Mittels eines Vergleichs der beiden relativen Positionen kann nun die empfangene Fahrzeug-zu-X-Botschaft validiert werden, sofern beide Positionen übereinstimmen, oder verworfen werden, wenn die Positionen voneinander abweichen.

Das Dokument DE 10 2010 029 744 A1 offenbart ein Verfahren und eine zugehörige Kommunikationseinheit zur Positionierung in einer Fahrzeug-zu-Umgebungs-Kommunikation, wobei ein Abfrageimpuls durch einen Sendeimpuls beantwortet wird. Mittels des Antwortimpulses wird eine Positionierung durchgeführt.

Das Dokument US 4,733,238 A offenbart ein Verfahren und ein System für gleichzeitige Radarortung und Datenkommunikation.

Das Dokument CHRISTIAN STURM ET AL: "Waveform Design and Signal Processing Aspects for Fusion of Wireless Communications and Radar Sensing", PROCEEDINGS OF THE IEEE, IEEE. NEW YORK, US, Bd. 99, Nr. 7, 1. Juli 2011, Seiten 1236-1259, XPO11367583, ISSN: 0018-9219, DOI: 10.1109/JPROC.2011.2131110 offenbart ein Wellenformdesign und Signalverarbeitungsaspekte zur Fusion von drahtloser Kommunikation und Radarortung.

Das Dokument C. Sturm et al.: "Evaluation of beam-forming algorithms for automotive OFDM signal based radar", RADAR CONFERENCE, 2009, EURAD 2009, EUROPEAN, 30. September 2009 (2009-09-30), Seiten 141-144, XP055555297, Piscataway, NJ, USA, ISBN: 978-1-4244-4747-3 offenbart Techniken zur Radarordnung unter Verwendung von OFDM-Signalen.

Nachteilig bei den aus dem Stand der Technik bekannten Verfahren und Vorrichtungen ist es jedoch, dass zur zuverlässigen Erfassung von Objekten und insbesondere zur Validierung eines erkannten Objekts eine möglichst große Zahl unterschiedlicher Sensoren verschiedener Sensorgattungen notwendig ist, was wiederum mit einem vergleichsweise hohen Kostenaufwand und Austattungsaufwand für derartige Kraftfahrzeuge verbunden ist.

Der Erfindung liegt daher die Aufgabe zugrunde, ein Verfahren vorzuschlagen, welches es ermöglicht, den gemäß dem Stand der Technik notwendigen Ausstattungsaufwand an Umfeldsensoren zu reduzieren, ohne dabei Informationseinbußen in Kauf zu nehmen.

Diese Aufgabe wird erfindungsgemäß durch das Verfahren zur Positionsbestimmung von Objekten mittels Kommunikationssignalen gemäß Anspruch 1 gelöst.

Gemäß dem erfindungsgemäßen Verfahren zur Positionsbestimmung von Objekten mittels Fahrzeug-zu-X-Kommunikationssignalen, bei welchem ein zur drahtlosen Kommunikation befähigter Sendeempfänger Kommunikationssignale sendet, wobei der Sendeempfänger zum gleichzeitigen Senden und Empfangen befähigt ist und
wobei die Kommunikationssignale in einer Signalausbreitungszone an mindestens einem Objekt zumindest teilweise als Reflexionssignale reflektiert werden, empfängt der Sendeempfänger die Reflexionssignale. Das Verfahren zeichnet sich dadurch aus, dass Phaseninformationen der Reflexionssignale und/oder der Kommunikationssignale bestimmt werden.

Durch die Verwendung von Phaseninformationen anstelle von Intensitätsinformationen wird das erfindungsgemäße Verfahren robuster und weniger anfällig für Störungen, da die Phaseninformationen im Gegensatz zu Intensitätsinformationen weniger leicht zu stören sind. Beispielsweise reicht schone eine nur geringe Abschattung des Sendeempfängers, um die von hinter der Abschattung ausgehenden Kommunikationssignale nur noch in deutlich abgeschwächter Form zu erfassen. Die Phaseninformationen jedoch bleiben von derartigen Abschattungen unbeeinflusst.

Das Verfahren wird erfindungsgemäß in einer Fahrzeug-zu-X-Kommunikationseinrichtung ausgeführt.

Bevorzugt ist es außerdem vorgesehen, dass der Sendeempfänger empfangene Kommunikationssignale und empfangene Reflexionssignale zeitlich parallel auswertet. Dadurch können auch Phaseninformationen der Kommunikationssignale und der Reflexionssignale untereinander verglichen werden. Zudem ist so eine zeitlich unmittelbare Auswertung gewährleistet, welche insbesondere für sicherheitsrelevante Anwendungen wie z.B. bestimmte Fahrerassistenzsysteme in einem Fahrzeug, von Bedeutung ist.

Weiterhin ist es bevorzugt, dass die Kommunikationssignale noch gesendet werden, während bereits die zugehörigen Reflexionssignale wieder empfangen werden. Ein derartiges Verfahren ist auch als sogenanntes "gepulstes continuous wave"-Verfahren bekannt. Da die zu Kommunikationszwecken gesendeten Kommunikationssignale im Vergleich zu gewöhnlichen Radarsignalen üblicherweise sehr lang sind, wird aufgrund der hohen Ausbreitungsgeschwindigkeit elektromagnetischer Wellen oftmals der Fall auftreten, dass ein Reflexionssignal bereits wieder am Sendeempfänger einläuft, während dieser noch das Kommunikationssignal sendet. Durch entsprechende Auslegung der Hardware, z.B. mittels eines Zirkulators, eines Ringleiters, eines Richtkopplers oder mittels elektrisch unabhängiger Antennen zum Senden und Empfangen, kann auch in diesem Fall eine Verarbeitung des Reflexionssignals erfolgen bzw. das Kommunikationssignal weiterhin gesendet werden.

Erfindungsgemäß ist es vorgesehen, dass aus den Phaseninformationen eine Entfernung und/oder eine Richtung zum mindestens einen Objekt bestimmt werden.

Die Erfindung beschreibt somit ein Verfahren, welches mit vergleichsweise einfachen Mitteln eins Positionsbestimmung von Objekten in einem 360°-Winkel rund um den Sendeempfänger ermöglicht. Dieser Positionsbestimmungswinkel bzw. Positionsbestimmungsbereich ergibt sich durch den Abstrahlwinkel der Kommunikationssignale, welcher in aller Regel 360° beträgt. Das erfindungsgemäße Verfahren bietet somit einen deutlich größeren Positionsbestimmungswinkel bzw. Positionsbestimmungsbereich als beispielsweise für ähnliche Zwecke eingesetzte Radarsensoren.

Weiterhin ergibt sich der Vorteil, dass die Anzahl der gemäß dem Stand der Technik benötigten Umfeldsensoren in einem Fahrzeug, welches das erfindungsgemäße Verfahren ausführt, reduziert werden kann, da eine ohnehin vorhandene Kommunikationseinrichtung zusätzlich zur Positionsermittlung von Objekten im Umfeld des Fahrzeugs verwendet werden kann. Somit kann der sensorseitige Ausstattungsaufwand eines derartigen Fahrzeugs reduziert werden, ohne dabei Informationseinbußen in Kauf zu nehmen.

Ein weiterer Vorteil stellt sich insofern dar, als dass gerade bei der anfänglichen Einführung von Fahrzeug-zu-X-Kommunikationseinrichtungen in Fahrzeuge, wenn es für zur Fahrzeug-zu-X-Kommunikation befähigte Fahrzeuge also nur eine sehr geringe Zahl von Kommunikationsteilnehmern gibt, dennoch ein spürbarer Mehrwert für den Fahrzeugkunden erzeugt wird, da dieser unabhängig von der Zahl der in seiner Umgebung vorhandenen Fahrzeug-zu-X-Kommunikation befähigten Fahrzeuge über das erfindungsgemäße Verfahren eine Positionsermittlung von Objekten in seiner Umgebung vornehmen kann. Daher ist das erfindungsgemäße Verfahren dazu geeignet, die Durchdringung des Marktes, insbesondere in der Anfangszeit, nach der anfänglichen Einführung von Fahrzeug-zu-X-Kommunikationseinrichtungen in Fahrzeuge zu beschleunigen.

Zur Validierung einer nach dem Verfahren der Erfindung bestimmten Position kann diese in einem folgenden Schritt bevorzugt einer digitalen Straßenkarte überlagert werden, wobei nur eine solche bestimmte Position validiert wird, die sich einer in der digitalen Straßenkarte verzeichneten Straße zuordnen lässt. Somit werden bestimmte Position, die auf einer Straße liegen und damit für einen Verkehrsteilnehmer wie ein Kraftfahrzeug tendenziell von Bedeutung sind, in jedem Fall validiert. Umgekehrt werden bestimmte Positionen, die sich nicht einer Straße zuordnen lassen, verworfen. Das Risiko, eine nach dem Verfahren der Erfindung korrekt bestimmten Position zu verwerfen ist vergleichsweise gering. Und selbst wenn in diesem Zusammenhang eine korrekt bestimmt Position verworfen werden würde, so ist diese in der Regel nicht von Bedeutung, da für einen Verkehrsteilnehmer üblicherweise nur diejenigen Objekte wichtig sind, die sich ebenfalls auf der Straße befinden.

Zweckmäßigerweise kommuniziert der Sendeempfänger mittels mindestens einer der folgenden Kommunikationsarten:
- WLAN-Kommunikation, insbesondere nach IEEE 802.11p,
- WiFi-Direct-Kommunikation,
- ISM-Kommunikation (Industrial, Scientific, Medical Band), insbesondere über eine funkverbindungsfähige Schließvorrichtung,
- Bluetooth-Kommunikation,
- ZigBee-Kommunikation,
- UWB-Kommunikation (Ultra Wide Band),
- WiMax-Kommunikation (Worldwide Interoperability for Microwave
   Access),
- Remote-Keyless-Entry-Kommunikation,
- Mobilfunk-Kommunikation, insbesondere GSM-, GPRS-, EDGE-,
- UMTS-Kommunikation,
- LTE-Kommunikation und
- Infrarot-Kommunikation.
Die mobilfunkbasierten Kommunikationsmittel sind dabei besonders zweckmäßigerweise einem automatischen Notruf-Modul zugeordnet. Die aufgeführten Kommunikationsarten bieten hinsichtlich ihrer Kommunikationseigenschaften unterschiedliche Vor- und Nachteile, je nach Art, Wellenlänge und verwendetem Datenprotokoll. WLAN-Verbindungen ermöglichen z.B. eine hohe Datenübertragungsrate und einen schnellen Verbindungsaufbau. ISM-Verbindungen bieten hingegen nur eine geringere Datenübertragungsrate, sind aber hervorragend zur Datenübertragung um Sichthindernisse herum geeignet. Infrarotverbindungen wiederum bieten ebenfalls eine geringe Datenübertragungsrate. Mobilfunkverbindungen schließlich werden durch Sichthindernisse nicht beeinträchtigt und bieten eine gute Datenübertragungsrate. Dafür ist der Verbindungsaufbau von Mobilfunkverbindungen jedoch vergleichsweise langsam.

Erfindungsgemäß ist es vorgesehen, dass die Phaseninformationen Differenzphasen der Reflexionssignale sind, die entweder durch ein einzelnes Antennenelement oder mindestens zwei Antennenelemente erzeugt werden, wobei aus den durch das einzelne Antennenelement erzeugten Phaseninformationen eine Entfernung und/oder eine Bewegungsrichtung zum mindestens einen Objekt bestimmt werden, oder aus den durch die mindestens zwei Antennenelemente erzeugten Phaseninformationen eine Entfernung und/oder ein Winkel zum mindestens einen Objekt bestimmt werden. Durch die Differenzbildung ergibt sich in jedem Fall der Vorteil, dass Informationen, die in den Phaseninformationen beider zur Differenzbildung herangezogenen Signale gleichermaßen vorhanden sind, entfernt werden. Dies vereinfacht die nachfolgende Auswertung wesentlich, da ein Großteil der ohnehin irrelevanten Informationen in der Differenzphase nicht mehr enthalten ist. Ein Beispiel hierfür ist etwa die Eigengeschwindigkeit eines das Verfahren ausführenden Fahrzeugs, welche durch die Bildung der Differenzphase eliminiert wird. Würde die Eigengeschwindigkeit des Fahrzeugs nicht eliminiert werden, so würde das Verfahren das gesamte Umfeld des Fahrzeugs als zum Fahrzeug relativ-bewegt wahrnehmen, wodurch für jeden Punkt bzw. jedes Objekt im Umfeld eine entsprechende Geschwindigkeitsauswertung gerechnet werden müsste.

Weiterhin ist es bevorzugt, dass ein empfangenes Reflexionssignal und/oder ein gesendetes Kommunikationssignal in einen vorauseilenden und einen nachlaufenden Anteil aufgespalten wird, wobei die Phase des vorauseilenden Anteils unbeeinflusst bleibt und die Phase des nachlaufenden Anteils um 90° verzögert wird. Somit kann eine evtl. Mehrdeutigkeit der Phaseninformation aufgelöst werden, da diese nun als komplexe Zahl in der Ebene der komplexen Zahlen statt als reelle Zahl auf einem eindimensionalen Zahlenstrang behandelbar ist und somit eine zusätzliche Dimension aufweist. Ebenso kann auch ein gesendetes Kommunikationssignal zur Differenzbildung mit dem Reflexionssignal in einen vorauseilenden und einen nachlaufenden Anteil aufgespalten werden. Ein ebenso einfacher wie effektiver Weg zur Aufspaltung eines Signals ist es dabei, das Signal über zwei unterschiedlich lange elektrische Leitungen zu führen, wobei die eine Leitung ein Viertel der Signalwellenlänge länger ist als die andere Leitung. Dies bewirkt die beschriebene Aufspaltung. Insbesondere beim Auftreten von Dopplerfrequenzen im Reflexionssignal bzw. im Kommunikationssignal kann somit eine zusätzliche Richtungsbestimmung zum Objekt erfolgen.

Zweckmäßigerweise ist es vorgesehen, dass die Differenzphasen mittels Mischen eines Kommunikationssignals mit einem zugehörigen Reflexionssignal oder mittels Mischen zweier unterschiedlicher Reflexionssignale bestimmt werden, insbesondere mittels konjugiert komplexer Multiplikation und/oder mittels Überkreuz-Multiplikation. Durch das Mischen zweier Signale entstehen sogenannte Seitenbänder im Abstand der Differenzfrequenz neben den beiden gemischten Signalen, also neben dem Kommunikationssignal und dem Reflexionssignal bzw. neben den beiden Reflexionssignalen. Durch die konjugiert komplexe Multiplikation bzw. die Überkreuz-Multiplikation kann dieser Schritt auch rechnerisch in der Ebene der komplexen Zahlen erfolgen. In allen Fällen wird eine zuverlässige Bestimmung der Differenzphasen ermöglicht.

Gemäß einer weiteren bevorzugten Ausführungsform der Erfindung ist es vorgesehen, dass der Sendeempfänger Kommunikationssignale auf mindestens zwei unterschiedlichen Frequenzen sendet. Somit wird für den Sendeempfänger die Möglichkeit geschaffen, entsprechende Reflexionssignale zu empfangen, die aufgrund ihrer unterschiedlichen Frequenzen und damit unterschiedlichen Eigenschaften unterschiedliche Informationen über das sie reflektierende Objekt enthalten bzw. identische Informationen über das sie reflektierende Objekt unterschiedlich beschreiben. Somit stehen zusätzliche Informationen über das Objekt zu Verfügung.

Insbesondere ist es bevorzugt, dass aus den durch die mindestens zwei unterschiedlichen Frequenzen erzeugten Phaseninformationen eine Entfernung zum Objekt bestimmt wird. Das Heranziehen von zwei unterschiedlichen Frequenzen, insbesondere das Heranziehen von Reflexionssignalen von auf zwei unterschiedlichen Frequenzen gesendeten Kommunikationssignalen, ermöglichen dabei über das sogenannte Vernier-Verfahren eine Bestimmung der Entfernung zum Objekt. Dabei wird aus dem Verhältnis der Phasen, welche sich aufgrund der unterschiedlichen Wellenlänge bzw. Frequenz der gesendeten Kommunikationssignale mit der zurückgelegten Wegstrecke unterschiedlich ändern, auf eine Entfernung geschlossen. Da sich die Verhältnisse der Phasen ab einer bestimmten Entfernung vom Sendeempfänger zu wiederholen beginnen, ist eine Bestimmung der Entfernung ab einem bestimmten Entfernungsgrenzwert nicht mehr eindeutig, da ein bestimmtes Phasenverhältnis sowohl einer bestimmten Entfernung als auch einem beliebigen Vielfachen dieser Entfernung entsprechen kann. Um derartige Vieldeutigkeiten zu vermeiden, wird die Sendeleistung der Kommunikationssignale bevorzugt derart gewählt, dass ein Reflexionssignal von einem Objekt, welches weiter als die eindeutige Entfernung vom Sendeempfänger entfernt ist, nicht mehr erfasst werden kann.

Außerdem ist es insbesondere vorgesehen, dass die mindestens zwei Frequenzen zwei unterschiedliche Kommunikationskanäle eines gemeinsamen Kommunikationsmittels sind. Dadurch ist in der Regel sichergestellt, dass der Frequenzabstand der zwei Frequenzen nicht zu groß ist und zudem eine einheitliche Auswertung und Verarbeitung durch ein und dasselbe Kommunikationsmittel gewährleistet ist.

Ganz besonders bevorzugt ist in diesem Zusammenhang als Kommunikationsmittel WLAN nach IEEE802.11p geeignet, bei welchem über zwei jeweils 10 MHz Bandbreite aufweisende Kanäle kommuniziert wird, welche durch einen dritten, ungenutzten und ebenfalls 10 MHz Bandbreite aufweisenden Kanal getrennt sind. Durch die verwendete Wellenlänge bei 5,9 GHz und die verwendete Sendeleistung ist bei WLAN nach IEEE802.11p sichergestellt, dass eine frequenzbedingte, maximal eindeutige Entfernung von ca. 15 m leistungsbedingt nicht überschritten werden kann.

Des Weiteren ist es bevorzugt, dass die Kommunikationssignale und die Reflexionssignale mittels mindestens zwei elektrisch unabhängiger Antennenelemente des Sendeempfängers empfangen werden, wobei insbesondere die Phaseninformationen mittels der mindestens zwei Antennenelemente bestimmt werden. Dadurch ergibt sich der Vorteil, dass das sogenannte Interferometer-Verfahren genutzt werden kann, welches eine Bestimmung der Richtung zum Objekt ermöglicht. In diesem Fall wird bevorzugt ein und dasselbe Reflexionssignal an den beiden Antennenelementen hinsichtlich seiner Phaseninformation ausgewertet. Zu beachten ist dabei, dass der räumliche Abstand der Antennenelemente nicht größer als die halbe Wellenlänge der gesendeten Kommunikationssignale bzw. der empfangenen Reflexionssignale sein darf, da sonst Mehrdeutigkeiten in der Richtungsinformation auftreten. Da das Reflexionssignal vom Objekt zurück zum Sendeempfänger läuft, welcher das Reflexionssignal mit zwei räumlich getrennten Antennenelementen empfängt, wird das Objekt von den beiden Antennenelementen in der Regel unter einem leicht unterschiedlichen Winkel wahrgenommen. Dieser unterschiedliche Winkel ist auch dafür verantwortlich, dass die vom Reflexionssignal zurückgelegte Entfernung vom Objekt zu den beiden Antennenelementen nicht exakt identisch ist. Dies wiederum führt zu einer jeweils unterschiedlichen Phaseninformation des Reflexionssignals an jedem der beiden Antennenelemente. Da zudem der räumliche Abstand der Antennenelemente bekannt ist, kann aus der Phaseninformation ein Winkel bestimmt werden, welcher die Richtung des das Reflexionssignal reflektierenden Objekts zum Empfänger angibt. Bei Verwendung von zwei elektrisch unabhängigen Antennenelementen kann die Richtung zum Objekts auf 180° eindeutig bestimmt werden. Bevorzugt werden in diesem Fall Reflexionssignale bzw. Kommunikationssignale bei gleicher Frequenz verwendet, so dass die unterschiedlichen Phasen nicht durch unterschiedliche Frequenzen erzeugt werden.

Insbesondere ist es bevorzugt, dass die Kommunikationssignale und die Reflexionssignale mittels vier elektrisch unabhängiger Antennenelemente des Sendeempfängers empfangen werden, wobei insbesondere die Phaseninformationen mittels der vier Antennenelemente bestimmt werden. Dies erlaubt es, die Bestimmung der Richtung des Objekts zum Sendeempfänger auf 360° eindeutig vorzunehmen. Beispielsweise kann die Phaseninformation an einem ersten Paar von Antennenelementen als Sinus-Anteil und die Phaseninformation am zweiten Paar von Antennenelementen als Cosinus-Anteil eines Gesamtsignals betrachtet werden. Durch Anwendung einer arctan²-Funktion auf den Sinus-Anteil und den Cosinus-Anteil erhält man nun einen Winkel, welcher die Richtung zum Objekt auf 360° eindeutig beschreibt.

Außerdem ist es insbesondere bevorzugt, dass aus den durch die mindestens zwei Antennenelemente erzeugten Phaseninformationen eine Richtung zum Objekt bestimmt wird. Somit wird also mittels des bereits beschriebenen Interferometer-Verfahrens die Richtung zum Objekt bestimmt.

Außerdem ist es vorteilhaft, dass die Richtung und die Entfernung zum Objekt mittels zeitlich abwechselnder Auswertung der Differenzphasen von zwei Frequenzen und der Differenzphasen an zwei Antennenelementen bestimmt werden. Daraus ergibt sich der Vorteil, dass auch durch den vergleichsweise unaufwändigen Aufbau mit nur zwei Antennenelementen mittels des erfindungsgemäßen Verfahrens neben der Entfernung auch die Richtung zum Objekt auf 360° eindeutig bestimmt werden kann.

Weiterhin ist es bevorzugt, dass der Sendeempfänger mit Kommunikationsteilnehmern, insbesondere mit Verkehrsteilnehmern, und mit Infrastruktureinrichtungen, kommuniziert. Daraus ergibt sich der Vorteil, dass auch der Sendeempfänger mit seiner Umgebung Informationen in Form von Kommunikationssignalen austauscht. Dies begünstigt ein häufiges Senden von Kommunikationssignalen durch den Sendeempfänger und begünstigt somit auch das erfindungsgemäße Verfahren. Die Infrastruktureinrichtungen können z.B. Verkehrszeichen, Ampeln oder sonstige Sendeeinrichtungen sein, welche der Regelung des Straßenverkehrs dienen. Die Verkehrsteilnehmer sind beispielsweise Kraftfahrzeuge, aber auch Radfahrer oder entsprechend ausgestattete Fußgänger.

Außerdem ist es vorgesehen, dass die Objekte Verkehrsteilnehmer, insbesondere Fahrzeuge, Radfahrer und Fußgänger, Infrastruktureinrichtungen und Kommunikationsteilnehmer sind.
Dies ermöglicht auch einen Austausch von Positionsdaten der Kommunikationsteilnehmer, die in diesem Fall Objekte darstellen, mittels der Kommunikationssignale, wobei die Positionsdaten mittels des erfindungsgemäßen Verfahrens validiert werden können.

Zweckmäßigerweise ist es vorgesehen, dass der Sendeempfänger für das mindestens eine Objekt in der Signalausbreitungszone jeweils eine Dopplerfrequenz bestimmt. Die Dopplerfrequenz enthält eine zusätzliche Information über die Geschwindigkeit des Objekts. Somit kann neben der Entfernung und der Richtung zum Objekt also auch eine Geschwindigkeit des Objekts bestimmt werden, womit das Objekt und insbesondere ein Verhalten des Objekts präziser beschrieben werden.

Insbesondere ist es zweckmäßig, dass die Dopplerfrequenz aus einer Dopplerphase bestimmt wird, wobei die Dopplerfrequenz insbesondere mittels linearer Extrapolation aus einer zeitlich ersten Bestimmung der Dopplerphase und einer zeitlich zweiten Bestimmung der Dopplerphase bestimmt wird. Da die gesendeten Kommunikationssignale in der Regel zeitlich zu kurz sind, um während des Sendens mindestens zwei Nulldurchgänge zu durchlaufen, und daher entsprechend auch die Reflexionssignale zeitlich zu kurz sind, um während des Empfangens mindestens zwei Nulldurchgänge zu durchlaufen, ergibt sich so der Vorteil, dass aus der Dopplerphase dennoch die Dopplerfrequenz bestimmt werden kann. Die Dopplerphase lässt sich zunächst vergleichsweise einfach aus der Differenzphase zwischen dem gesendeten Kommunikationssignal und dem empfangenen Reflexionssignal bestimmen. Die Dopplerphase wird dabei in einer zeitlich ersten Bestimmung der Dopplerphase jeweils am Anfang eines empfangenen Reflexionssignals und in einer zeitlich zweiten Bestimmung der Dopplerphase jeweils am Ende eines empfangenen Reflexionssignals bestimmt. Mittels linearer Extrapolation kann nun aus der Dopplerphase auf einfache Art und Weise die Dopplerfrequenz bestimmt werden.

Gemäß einer weiteren bevorzugten Ausführungsform der Erfindung ist es vorgesehen, dass die Dopplerfrequenz mittels eines Tiefpasses, insbesondere mittels eines digitalen Tiefpasses, gefiltert wird. Dies bewirkt, dass - abhängig von der Auslegung des Tiefpasses - Dopplerfrequenzen, welche eine bestimmte Grenzfrequenz überschreiten, gefiltert und nicht zur weiteren Auswertung herangezogen werden. Gemäß einer besonders bevorzugten Ausführungsform ist der Tiefpass derart ausgelegt, dass durch Differenzgeschwindigkeiten von über 400 km/h erzeugte Dopplerfrequenzen gefiltert werden.

Insbesondere folgt auf die digitale Tiefpassfilterung eine an sich bekannte Unterabtastung der empfangenen Signale. Dadurch verringert sich der Rechenaufwand für die jeweils nachfolgende schnelle Fouriertransformation erheblich. Bevorzugt werden nur unaufwändige schnelle Fouriertransformationen gerechnet, da mit geringen Dopplerfrequenzen zu rechnen ist (aufgrund üblicherweise geringerer Differenzgeschwindigkeiten als 400 km/h). Durch das Rechnen mit derart geringen Dopplerfrequenzen ergeben sich auch entsprechend verkürzte Latenzzeiten. Dies ist bei einer Verkehrsortung von Vorteil, da stets aktuelle Daten über Zielobjekte benötigt werden. Die in diesem Zusammenhang tolerierbaren Latenzzeiten sind bevorzugt kürzer als 250 ms.

Außerdem ist es vorgesehen, dass aus einer Vielzahl von bestimmten Entfernungen und Richtungen ein Bewegungspfad des mindestens einen Objekts erstellt wird. Daraus ergibt sich der Vorteil, dass eine Objektverfolgung ermöglicht wird, welche wiederum eine Reihe an sich bekannter Filter-Verfahren unterzogen werden kann, z.B. einem sogenannten Kalman-Filter. Somit können Objekte, die einen unplausiblen Bewegungspfad aufweisen, als nicht existierend verworfen werden.

Außerdem ist es vorteilhaft, dass eine bestimmte Position eines Kommunikationsteilnehmers mit einer in einer vom Kommunikationsteilnehmer gesendeten Botschaft enthaltenen Positionsangabe abgeglichen wird und die Positionsangabe validiert wird, wenn sie der bestimmten Position nicht widerspricht. Somit ermöglicht die Erfindung es, auf einfache Weise Positionen, welche in Kommunikationssignalen anderer Verkehrsteilnehmer enthalten sind, zu validieren. Für die Validierung der Position sind jeweils sinnvolle Toleranzen einzuhalten. Außerdem muss in der Regel die als absolute Position im Kommunikationssignale enthaltene Position, welche oftmals auf dem GPS-Koordinatensystem basiert, in eine relative Position zum Sendeempfänger umgerechnet werden oder umgekehrt.

Weiterhin ist es zweckmäßig, dass in den empfangenen Kommunikationssignalen transportierte Daten zumindest anteilig ausgewertet werden. Daraus ergibt sich der Vorteil, dass ein für gewöhnlich stattfindender Kommunikationsvorgang weiterhin unbeeinflusst und uneingeschränkt ausgeführt werden kann. Das erfindungsgemäße Verfahren führt somit zu keinerlei Einschränkung der Kommunikationsfähigkeit des Empfängers.

Des Weiteren ist es bevorzugt, dass die transportierten Daten und/oder die bestimmten Positionen an mindestens ein Fahrerassistenzsystem weitergeführt werden. Somit können sowohl die transportierten Daten als auch die bestimmten Positionen - ggf. auch gemeinsam - von einem entsprechenden Fahrerassistenzsystem verarbeitet und zur Fahrerunterstützung verwendet werden. Dies ermöglicht eine sicherheitssteigernde Nutzung der vorhandenen Informationen und Daten. Auch ein Abstands- und Geschwindigkeitsregler kann auf einfache Art und Weise mittels der erfindungsgemäßen Verfahrens realisiert werden, da sowohl die Entfernung zu einem Vorausfahrzeug bestimmt werden kann als auch die Geschwindigkeit des Vorausfahrzeugs bestimmt werden kann. Somit entfallen die vergleichsweise hohen Ausstattungskosten für den in diesem Fall üblicherweise verwendeten Radarsensor.

Gemäß einer weiteren bevorzugten Ausführungsform der Erfindung ist es vorgesehen, dass der Sendeempfänger Kommunikationssignale ohne Informationsinhalt sendet und/oder Kommunikationssignale, deren Informationsinhalt unverändert gültig ist, mehrfach aufeinander folgend sendet. Dies ist immer dann von Vorteil, wenn nicht aus Kommunikationsgründen ausreichend viele Kommunikationssignale zur Positionsbestimmung gesendet werden. Damit das erfindungsgemäße Verfahren auch in diesem Fall zuverlässig ausgeführt werden kann, werden entweder Kommunikationssignale ohne Informationsinhalt gesendet oder Kommunikationssignale, deren Informationsinhalt unverändert gültig ist. Die Kommunikationssignale ohne Informationsinhalt werden bevorzugt als solche gekennzeichnet, damit ein evtl. Empfänger dieser Kommunikationssignale darüber informiert ist, dass die Kommunikationssignale beabsichtigterweise keine Informationen enthalten.

Außerdem ist es vorteilhaft, dass eine Empfangsleistung des Reflexionssignals ausgewertet wird. Da sich die Sendeleistung pro Flächeneinheit mit dem Quadrat der zurückgelegten Entfernung des Kommunikationssignals abschwächt und sich das Reflexionssignal ebenso verhält, kann der Sendeempfänger auch über die empfangene Leistung mittels des genannten Zusammenhangs auf die Entfernung zum Objekt schließen. Dies stellt eine zusätzliche Information dar, welche das Objekt weiter beschreibt.

Insbesondere ist es vorteilhaft, dass aus der Entfernung und der Empfangsleistung eine Gattung des mindestens einen Objekts bestimmt wird. Da die Entfernung wie beschrieben sowohl nach dem sogenannten Vernier-Verfahren als auch über die mit der vierten Potenz über die Entfernung abfallenden Empfangsleistung bestimmt werden kann, kann aus dem Verhältnis dieser beiden Größen eine Gattung des Objekts bestimmt werden. Die Empfangsleistung am Sendeempfänger wird nämlich von der Reflektivität des Objekts bezüglich des Kommunikationssignals beeinflusst. Beispielsweise liegt die Reflektivität für ein Kraftfahrzeug bei etwa 0,8, während sie für einen Fußgänger bei nur etwa 0,1 liegt. Somit kann aus dem Verhältnis der genannten Größen die Reflektivität des Objekts bestimmt werden und über die Reflektivität kann die Gattung des Objekts bestimmt werden.

Weiterhin ist es bevorzugt, dass die Entfernung und/oder die Richtung zum Objekt zusätzlich aus einem aus einer von den mindestens zwei Antennenelementen empfangenen elektromagnetischen Feldstärke gebildeten Verhältnis bestimmt wird. Daraus ergibt sich der Vorteil, dass nochmals eine weitere Information zur Verfügung steht, die das Objekt beschreibt und zur Validierung der aus den Phaseninformationen bestimmten Entfernung bzw. Richtung herangezogen werden kann. Alternativ kann die aus dem Verhältnis der empfangenen elektromagnetischen Feldstärke bestimmte Entfernung bzw. Richtung auch genutzt werden, um mit den aus den Phaseninformationen bestimmten Informationen einen Mittelwert zu bilden oder diese zu gewichten. Dieser Verfahrensschritt ist besonders vorteilhaft, wenn die Antennenelemente eine Richtcharakteristik aufweisen.

Die Erfindung betrifft weiterhin eine Vorrichtung zur kommunikationssignalbasierten Positionsermittlung von Objekten, welche einen Sendeempfänger, welcher eine Fahrzeug-zu-X-Kommunikationseinrichtung ist, mit einem Sendemodul zum drahtlosen Senden von Kommunikationssignalen und mit einem Empfangsmodul zum drahtlosen Empfangen von Kommunikationssignalen und Reflexionssignalen umfasst, wobei die Reflexionssignale an Objekten in einer Ausbreitungszone der Kommunikationssignale zumindest teilweise reflektiert werden, wobei der Sendeempfänger zum gleichzeitigen Senden und Empfangen befähigt ist und wobei der Sendeempfänger weiterhin eine Antennenanordnung umfasst. Die Vorrichtung zeichnet sich dadurch aus, dass die Vorrichtung mittels Phasenauswertemitteln Phaseninformationen der Reflexionssignale und/oder der Kommunikationssignale bestimmt und dazu konfiguriert ist, das erfindungsgemäße Verfahren auszuführen. Da die erfindungsgemäße Vorrichtung somit alle zur Ausführung des erfindungsgemäßen Verfahrens notwendigen Mittel umfasst und insbesondere das erfindungsgemäße Verfahren ausführt, ergeben sich hieraus die bereits beschriebenen Vorteile.

Die Vorrichtung ist vorteilhafterweise als eine erweiterte Fahrzeug-zu-X-Kommunikationseinrichtung ausgeführt.

Bevorzugt ist es vorgesehen, dass die Vorrichtung aus den Phaseninformationen mittels Entfernungsbestimmungsmitteln eine Entfernung und/oder mittels Richtungsbestimmungsmitteln eine Richtung zum mindestens einen Objekt bestimmt. Somit erfüllt die Vorrichtung eine über die reine Kommunikationsfunktion hinausgehende Zusatzfunktion, welche für den Fahrer eines mit der erfindungsgemäßen Vorrichtung ausgestatteten Fahrzeugs sofort einen spürbaren Mehrwert erzeugt, unabhängig davon, ob in seiner Umgebung eine ausreichende Anzahl von zur Fahrzeug-zu-X-Kommunikation befähigten Umgebungsfahrzeugen ist.

Bevorzugt ist es vorgesehen, dass die Antennenanordnung eine Richtcharakteristik zur Bestimmung einer Einlaufrichtung der Kommunikationsssignale und/oder der Reflexionssignale aufweist. Daraus ergibt sich der Vorteil, dass über die Richtcharakteristik eine vergleichsweise genaue, zusätzliche Bestimmung der Richtung zum Objekt ermöglicht wird. Diese aus der Empfangsleistung gewonnenen Informationen können die aus den Phaseninformationen gewonnen Informationen ergänzen.

Weiterhin ist es bevorzugt, dass die Antennenanordnung aus mindestens zwei Antennenelementen besteht. Dies ermöglicht einerseits die Ausführung des bereits beschriebenen Interferometer-Verfahrens zur Bestimmung der Richtung des Objekts und trägt andererseits zur Erhöhung der Wirkung der Richtcharakteristik bei.

Zweckmäßigerweise ist es vorgesehen, dass die Antennenelemente über Schaltelemente dem Sendemodul und/oder dem Empfangsmodul und/oder einem Abschlusswiderstand zuordenbar sind und dass die Richtcharakteristik von der Zuordnung geprägt ist. Daraus ergibt sich der Vorteil, dass die Antennenelemente beispielsweise dem Sendemodul derart zuordenbar sind, dass sie in ausgewählte Raumrichtungen senden. Oder aber die Antennenelemente werden dem Empfangsmodul derart zugeordnet, dass sich eine Richtcharakteristik für eine bestimmte Richtung ergibt. Dabei kann eine Vielzahl unterschiedlicher Zuordnungen in Form eine Zuordnungstabelle in einem elektronischen Speicher abgelegt sein und nach einem oder mehreren der folgenden Schemata ausgewählt werden:
- die Zuordnungstabelle wird mit einer festen Frequenz zyklisch durchfahren,
- die Zuordnungstabelle wird mittels eines Pseudorauschverfahrens zufällig durchfahren,
- die Zuordnungstabelle wird zufällig durchfahren,
- die Zuordnung wird je nach Art der auf dem erfindungsgemäßen Verfahren aufbauenden Anwendungen angepasst,
- die Zuordnung wird an eine aktuelle Situation angepasst,
- die Zuordnung wird an Signale anderer Umfeldsensoren angepasst,
- die Zuordnung wird an die empfangenen Kommunikationssignale angepasst,
- die Zuordnung wird an eine erkannte Gefahrensituationen angepasst und/oder
- die Zuordnung wird an eine Unsicherheit einer Auswertung eines Umfeldsensors und insbesondere eines Radarsensors angepasst.

Sofern die Zuordnungstabelle mittels eines Pseudorauschverfahrens zufällig durchfahren wird, können systematische Fehler reduziert werden. Beim zufälligen Durchfahren der Zuordnungstabelle kann z.B. der Bereich vor dem Fahrzeug höher gewichtet werden als der Bereich links und rechts vom Fahrzeug und diese wiederum höher als der Bereich hinter dem Fahrzeug, zumindest falls der Schwerpunkt der jeweiligen Anwendungen auf dem Raum vor dem Fahrzeug und neben dem Fahrzeug liegt. Die Zuordnung an eine aktuelle Situation ermöglicht es z.B. bei schneller Fahrt auf einer Autobahn bevorzugt eine Zuordnung auszuwählen, die Kommunikationssignale von vorne und von hinten gut empfängt bzw. gut in diese Richtungen senden kann. Bei einem Bremsmanöver wird bevorzugt der rückwärtige Bereich ausgewählt. An einer Kreuzung wird bevorzugt der Bereich links vor dem Fahrzeug und rechts vor dem Fahrzeug ausgewählt. Bei einer an Signale anderer Umfeldsensoren angepassten Zuordnung wird z.B. durch einen Umfeldsensor erkannt, dass sich von links ein Objekt nähert, so dass bevorzugt der Bereich links vom Fahrzeug ausgewählt wird. Sofern die Zuordnung an die empfangenen Kommunikationssignale angepasst wird, kann z.B. so vorgegangen werden, dass bevorzugt diejenige Richtung ausgewählt wird, aus welche die meisten Kommunikationssignale empfangen werden - oder aber bewusst das Gegenteil. Bei einer an eine Gefahrensituationen angepassten Zuordnung wird die Zuordnung derart ausgewählt, dass dort der beste Empfang ist, wo die höchste Gefahr detektiert wurde. Bei einer Zuordnung, die an die Unsicherheit der Radarauswertung angepasst ist, wird für diejenige Richtung die höchste Empfangssensitivität ausgewählt, welche die höchste Auswerteunsicherheit der empfangenen Radarsignale aufweist.

Da durch dieses Vorgehen auch die Sendeleistung pro Raumsegment reduziert wird, können die Kommunikationssignale häufiger oder auch gezielter ausgestrahlt werden. Dies entspricht einem sogenannten physischen Geocasting.

Außerdem ist es vorgesehen, dass die Antennenelemente zu einem mehrstrahligen Stern und/oder einem Vieleck, insbesondere einem Viereck, angeordnet sind und/oder als Vivaldi-Hörner oder als Schmalband-Patch-Elemente ausgeformt sind und/oder einen metallischen Rohrreflektor strahlenförmig umgeben und/oder in Rücken-an-Rücken-Anordnung ausgerichtet sind. Derartige Ausformungen und Anordnungen haben sich in verschiedenen Hinsichten und in verschiedenen Situationen als vorteilhaft erwiesen.

Insbesondere ist es vorgesehen, dass die Antennenanordnung zusätzlich ein Antennenelement eines globalen Navigationssatellitensystems umfasst. Das Antennenelement des globalen Navigationssatellitensystems ist dabei bevorzugt derart angeordnet, dass es seine besten Empfangseigenschaften für von oben einlaufende Signale aufweist. Insbesondere in einem Zwischenraum zwischen den anderen Antennenelementen kann ein derartiges, bevorzugt nach oben schauendes Antennenelement des globalen Navigationssatellitensystems platzsparend und effektiv angeordnet werden.

Die vorliegende Erfindung betrifft weiterhin eine Verwendung der erfindungsgemäßen Vorrichtung in einem Kraftfahrzeug.

Weitere bevorzugte Ausführungsformen ergeben sich aus den Unteransprüchen und der nachfolgenden Beschreibung eines Ausführungsbeispiels an Hand von Figuren.

Es zeigen
- Fig. 1: einen beispielhaften ersten Ausschnitt einer erfindungsgemäßen Vorrichtung zur kommunikationssignalbasierten Positionsermittlung von Objekten,
- Fig. 2: einen beispielhaften zweiten Ausschnitt einer erfindungsgemäßen Vorrichtung zur kommunikationssignalbasierten Positionsermittlung von Objekten,
- Fig. 3: einen schematischen Aufbau einer erfindungsgemäßen Vorrichtung, welche sich zur Bestimmung der Richtung zum Objekt eignet,
- Fig. 4: schematisch das Grundprinzip des sogenannten Vernier-Verfahrens zur Entfernungsbestimmung,
- Fig. 5: ein zweidimensionales Phasendiagramm, welches den möglichen Differenzphasen jeweils eine Entfernung zuordnet,
- Fig. 6: zwei Fahrzeuge, wobei eines der Fahrzeuge mit der erfindungsgemäßen Vorrichtung ausgestattet ist,
- Fig. 7: einen Sendeempfänger einer erfindungsgemäßen Vorrichtung, welcher mittels des Interferometer-Verfahrens eine Richtung zu einem Objekt feststellt,
- Fig. 8: schematisch eine Bestimmung einer Richtung gemäß dem Interferometer-Verfahren,
- Fig. 9: eine Antennenanordnung, die vier Antennenelemente umfasst,
- Fig. 10: eine mögliche Auswertung der von vier Antennenelementen erfassten Reflexionssignale zur Bestimmung einer,
- Fig. 11: ein weiterer möglicher Aufbau einer vier Antennenelemente umfassenden Antennenanordnung,
- Fig. 12: die Bestimmung von zwei Phasen an einer Antennenanordnung, die zwei Antennenelemente umfasst,
- Fig. 13: einen beispielhaften Aufbau einer erfindunsgemäßen Vorrichtung zur Bestimmung einer Entfernung und einer Richtung,
- Fig. 14: eine beispielhafte Ausführungsform eines Antennenmoduls mit sternförmig angeordneten Breitband-Vivaldi-Elementen,
- Fig. 15: eine beispielhafte Auswertung eines empfangenen Reflexionssignals oder Kommunikationssignals,
- Fig. 16: eine weitere mögliche Ausführungsform einer erfindungsgemäßen Antennenanordnung und
- Fig. 17: zwei Zuordnungstabellen zur Prägung einer Richtcharakteristik.

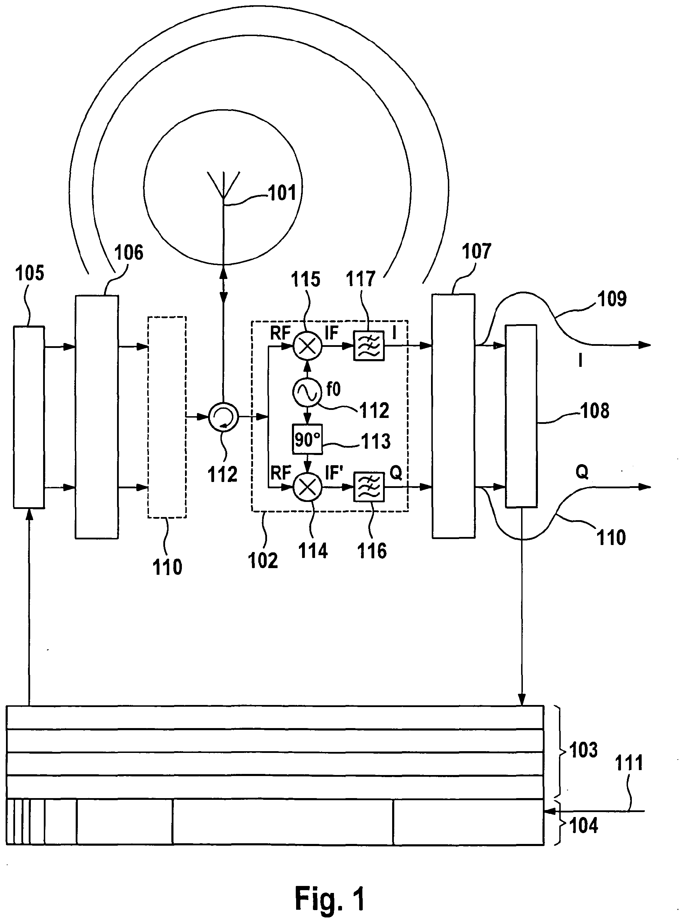

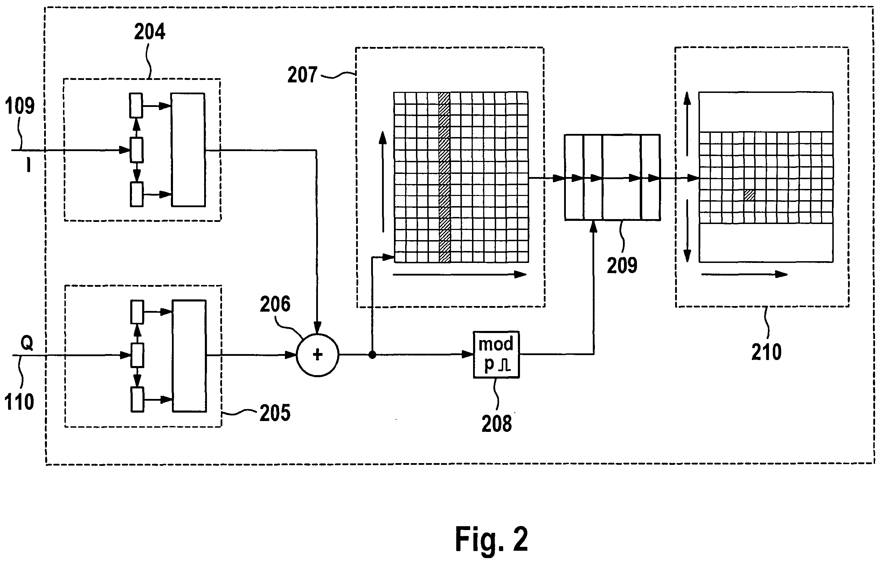

Fig. 1 zeigt einen beispielhaften ersten Ausschnitt einer erfindungsgemäßen Vorrichtung zur kommunikationssignalbasierten Positionsermittlung von Objekten. Die Vorrichtung umfasst Sendemodul 100, Antennenelement 101, Empfangsmodul 102, Modulator 105 zur Erzeugung eines zu versendenden Kommunikationssignals in digitaler Form, Digital-Analog-Wandler 106 zur Wandlung des digitalen Signals in ein analoges Signal, Analog-Digital-Wandler 107 zur Wandlung eines empfangenen Kommunikationssignals bzw. Reflexionssignals in digitale Form und Demodulator 108 zur Demodulation des empfangenen Kommunikationssignals bzw. Reflexionssignals, um dieses weiter verarbeiten zu können. Mittels Zirkulator 112 kann Antenne 101 zum gleichzeitigen Senden und Empfangen von Kommunikationssignalen bzw. Reflexionssignalen genutzt werden. Da die Vorrichtung nur ein einzelnes Antennenelement umfasst, kann sie prinzipbedingt ausschließlich das sogenannte Vernier-Verfahren zur Bestimmung der Entfernung und zusätzlich eine Bestimmung der Dopplerfrequenz durchführen. Die Vorrichtung sendet jeweils zeitlich abwechselnd auf einem ersten und einem dritten WLAN-Kanal des WLAN-Verfahrens nach 802.11p, während ein zweiter, den ersten vom dritten Kanal trennender Kanal, unbenutzt bleibt. Über Kommunikationsblock 103 wird eine Informationsanbindung unterschiedlicher Fahrerassistenzsysteme 104 mittels Modulator 105 bzw. Demodulator 106 gewährleistet. So kann Fahrerassistenzsysteme 104 das Senden von Kommunikationssignalen auslösen und Kommunikationssignale verabeiten. Empfangsmodul 102 umfasst beispielsgemäß Taktgeber 112, welcher eine Taktfrequenz von 5,9 GHz vorgibt, was der Basisfrequenz des von der Vorrichtung zur Kommunikation verwendeten WLAN 802.11p entspricht. Ein identischer Taktgeber ist auch von Sendemodul 100 umfasst, was aus Übersichtlichkeitsgründen in Fig. 1 jedoch nicht dargestellt ist. Weiterhin umfasst Empfangsmodul 102 Verzögerer 113, welcher über eine angepasste Leitungslänge das von Taktgeber 112 ausgegebene Taktsignal auf dem Signalpfad zu ebenfalls von Empfangsmodul 102 umfassten Mischer 114 im Vergleich zu Mischer 115 um 90° verzögert. Dies bewirkt eine Aufspaltung des empfangenen Kommunikationssignals bzw. Reflexionssignals in einen vorauseilenden Anteil I und nachlaufenden Anteil Q. Mischer 114 und 115 mischen die Anteile I bzw. Q mit dem Taktsignal von Taktgeber 112. Jeweils folgend auf Mischer 114 und 115 sind Tiefpass 116 und 117, welche die hohen Frequenzanteile der empfangenen Reflexionssignale filtern. Über Nebenschlüsse 109 und 110 werden sowohl vorauseilender Anteil I als auch nachlaufender Anteil Q nach der Digitalisierung an den in Fig. 2 dargestellten zweiten Ausschnitt der erfindungsgemäßen Vorrichtung zur kommunikationssignalbasierten Positionsermittlung von Objekten ausgegeben. Nach Maßgabe einer über Datenleitung 111 empfangenen Anforderung kann zudem ein Frequenzwechsel oder das Senden eines Kommunikationspakets ohne Informationsinhalt ausgelöst werden.

In Fig. 2 ist ein beispielhafter zweiter Ausschnitt einer erfindungsgemäßen Vorrichtung zur kommunikationssignalbasierten Positionsermittlung von Objekten dargestellt. Sowohl Anteil I als auch Anteil Q werden in Korrelationsmodulen 204 und 205 einer Vorverarbeitung unterzogen. Anteil I stellt dabei den Realteil einer komplexen Zahl dar, während Anteil Q den Imaginärteil der komplexen Zahl darstellt. Addierer 206 fügt nun beide Anteile zur komplexen Zahl zusammen. Die komplexe Zahl wird nun einerseits Vernier-Modul 207 zugeführt und dort als Echtzeitfunktion über die Zeit dargestellt sowie andererseits an Dopplerfrequenzmodul 208 weitergeführt, welches die komplexe Zahl zur Verarbeitung in Filtermodul 209 vorbereitet. Mittels Filtermodul 209 wird eine Tiefpassfilterung, ein Downsampling, eine schnelle Fouriertransformation sowie eine Bestimmung des Betrags komplexen Zahl durchgeführt. Diese Daten werden nun wiederum weitergeführt an Geschwindigkeitsmodul 210, welches neben der Entfernung nun auch die Geschwindigkeit eines Objekts in einer zweidimensionalen Karte darstellt.

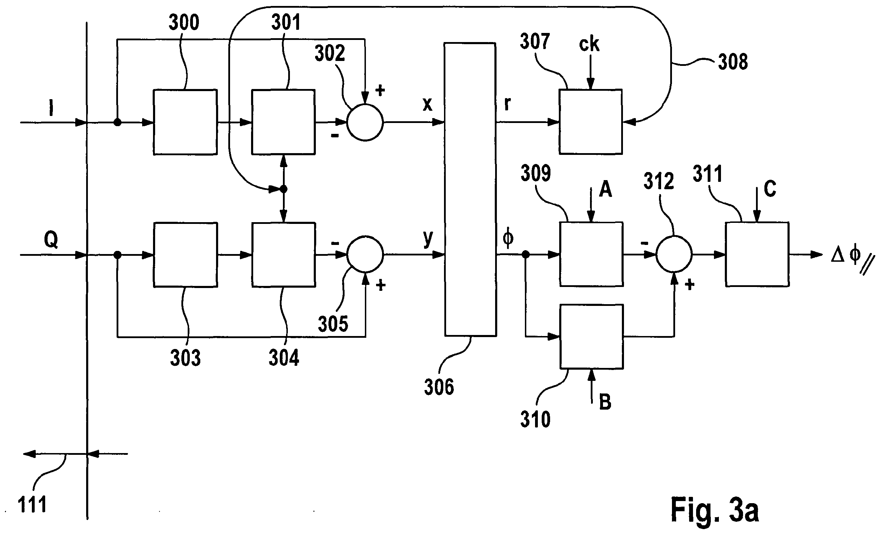

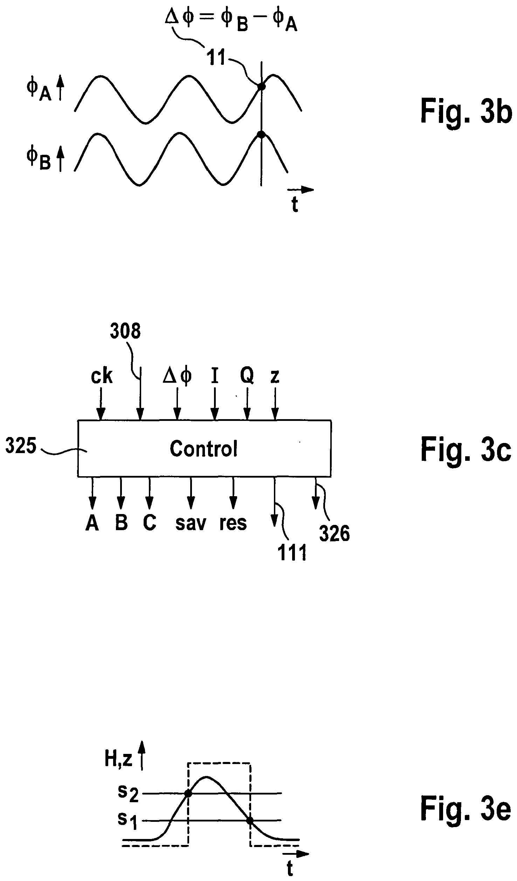

Fig. 3a zeigt einen schematischen Aufbau einer erfindungsgemäßen Vorrichtung zur kommunikationssignalbasierten Positionsermittlung von Objekten, welche sich zur Bestimmung der Richtung zum Objekt über das sogenannte Interferometer-Verfahren eignet. Anteil I eines Reflexionssignals am Ausgang von Analog-Digital-Wandler 107 wird mittels Nebenschluss 109 (Fig. 1) weitergeführt und durchläuft zunächst Tiefpass 300. Anteil I wird nun mittels Abtast-Halte-Glied 301 gespeichert und es wird der Nullpunkt des I-Anteils bestimmt. Mittels Subtrahierer 302 wird nun der Nullpunkt von Anteil I mit den von Abtast-Halte-Glied 301 gemittelten Nullpunkten abgeglichen. Somit können für die folgende Auswertung störende Abweichungen im Reflexionssignal bzw. im Anteil I beseitigt werden. Der Anteil Q wird mittels Tiefpass 303, Abtast-Halte-Glied 304 und Subtrahierer 305 entsprechend verarbeitet. Die derart aufbereiteten Anteile I und Q gelangen als Eingangsgrößen x und y in Arcustangensberechner 306, woraufhin Radius r und Phase Φ der durch Anteile I und Q gebildeten komplexen Zahl vorliegen. Radius r wird von Plausibilisierungsmodul 307 genutzt, welches im Takt ck überprüft, ob es sich um ein Reflexionssignal oder um ein Kommunikationssignal handelt. Falls hier kein Reflexionssignal sondern ein Kommunikationssignal erkannt wird, kann direkt mittels eines Rücksetzbefehls über Rückkopplung 308 ein vorgegebener Nullpunkt gesetzt werden. Im Extremfall kann andererseits ein unplausibles Reflexionssignal erkannt werden. Auch dann wird ein vorgegebener Nullpunkt gesetzt werden und das Reflexionssignal wird in diesem Fall als unplausibel eingestuft. Die Phase Φ kann entweder für Frequenz A der Phase Φ_{A} oder im Falle von Frequenz B der Phase Φ_{B} entsprechen. Die gewünschte Entfernungsinformation liegt bei Anwendung des Vernier-Prinzips in Differenzphase ΔΦ (siehe Fig. 3b), die mittels Abtast-Halte-Gliedern 309, 310, 311 und Subtrahierer 312 unter Zuhilfenahme von Steuersignalen A, B und C (Fig. 3a, 3c) gebildet werden. Steuersignale A und B steuern zugleich den Frequenzwechsel im Kommunikationssystem. Signal C wird jeweils dann ausgegeben, wenn die gültige Differenzphase ΔΦ übernommen werden kann.

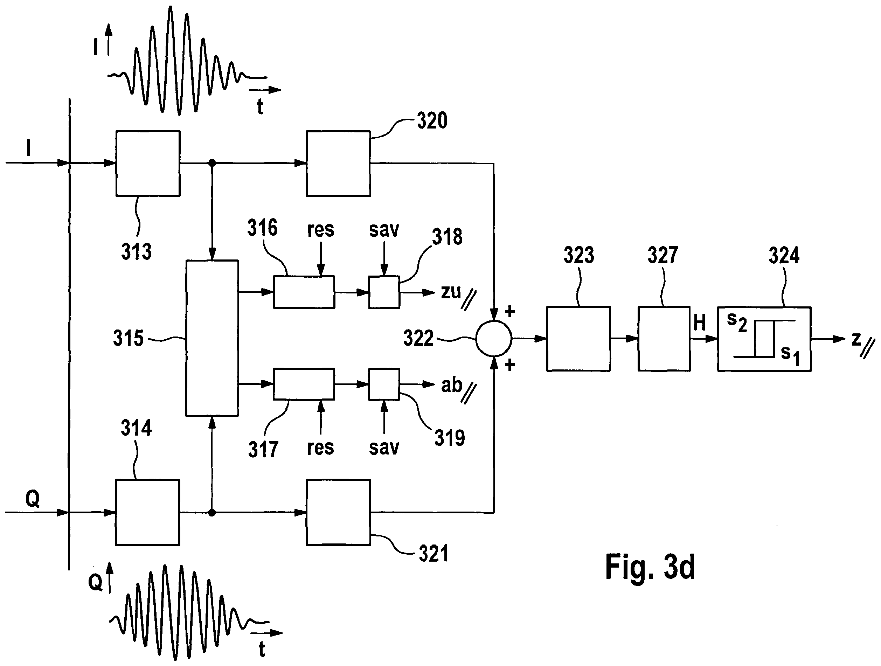

Gleichzeitig zu dem bisher beschriebenen Verfahrensablauf in Fig. 3a gelangen die Anteile I und Q in Fig. 3d über Bandpässe 313 bzw. 314 für eine angenommene Minimalgeschwindigkeit des zu erkennenden Objekts auf Richtungserkennungsmodul 315, welches beispielsgemäß durch zwei sogenannte Flip-Flops gebildet wird. Am Ausgang von Richtungserkennungsmodul 315 sind Zähler 316 und 317 angeordnet, die je nach Drehrichtung der Phase zulaufende und ablaufende Halbwellen der Anteile I und Q zählen. Die in zu- und ablaufende Halbwellen der Anteile I und Q getrennten Zähler 316 und 317 können mittels des Signals res zurückgesetzt und in Speichermodul 318 bzw. 319 mittels des Signals sav gespeichert werden.

In einer weiteren Auswertung gelangen die gefilterten Anteile I und Q auf Quadrierer 320 bzw. 321, Summierer 322 und Wurzelfunktion 323, zusammenfassend also ein sogenanntes Pythagoras-Glied, sowie auf Tiefpass 327, an dessen Ausgang die Hüllkurve H (siehe auch Fig. 3e) gebildet wird. Mittels Zwei-Flanken-Entscheiders 324 wird das Signal z gebildet, welches das prinzipielle Vorhandensein eines bewegten Objekts in der Signalausbreitungszone anzeigt.

Zusammenfassend ausgewertet und bedient werden die Auswertungsmittel von Prozessor 325 (Fig. 3c), der bei Bedarf auch das Senden zusätzlicher Kommunikationssignale ohne Informationsinhalt über die Kommunikationseinheit auslösen sowie einen Frequenzwechsel auslösen kann. Auch die Ausgabe einer Warnung an den Fahrer ist ggf. über Ausgang 326 möglich.

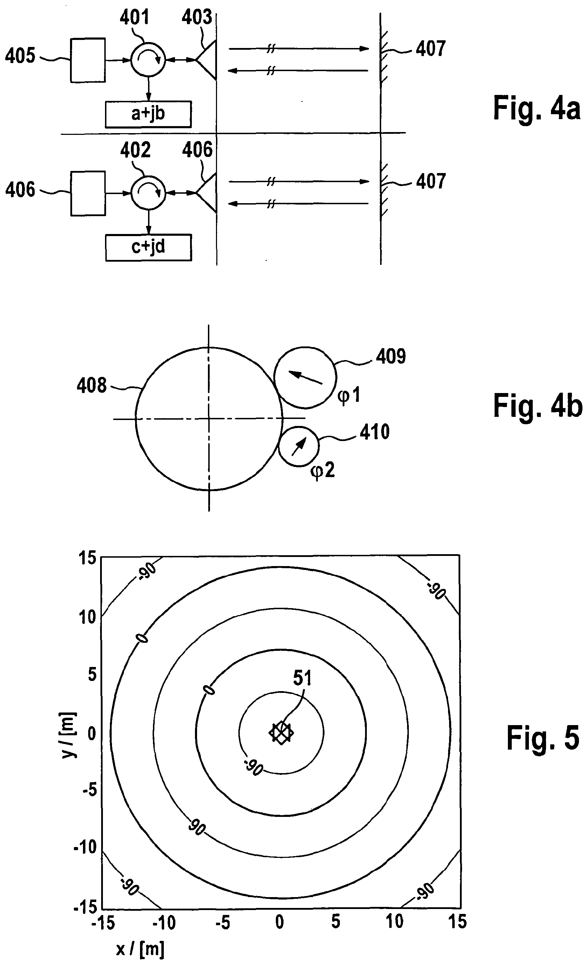

In Fig. 4a ist schematisch ein über eine Antennenanordnung mit zwei Antennenelementen 403 und 404 sendender und empfangender Sendeempfänger dargestellt. Mittels Zirkulatoren 401 und 402 ist der Sendeempfänger in der Lage über beide Antennenelemente 403 und 404 jeweils gleichzeitig zu empfangen und zu senden. Taktgeber 405 und 406 geben dabei für jedes Antennenelement 403 und 404 eine jeweils leicht unterschiedliche Sendefrequenz f1 und f2 vor. Die gesendeten Kommunikationssignale treffen auf Objekt 407 in der Signalausbreitungszone und werden von diesem reflektiert. Die von Antennenelementen 403 und 404 vom Sendeempfänger zu Objekt 407 und zurück zurückgelegte Wegstrecke kann als identisch angenommen werden. Da Antennenelemente 403 und 404 räumlich sehr dicht beieinander angeordnet sind. Aufgrund der unterschiedlichen Sendefrequenz f1 und f2 treffen die Reflexionssignale mit unterschiedlichen Phasen auf Antennenelemente 403 und 404. Aus dieser Differenzphase kann nun die Entfernung zum Objekt bestimmt werden. Dies wird anschaulich in Fig. 4b dargestellt. Figur 4b zeigt großes Zahnrad 408, welches die Entfernung zum Objekt symbolisiert, mittleres Zahnrad 409, welches Phase ϕ₁ des mit Sendefrequenz f1 gesendeten Reflexionssignals beim Empfangen an Antennenelementen 403 und 404 symbolisiert und kleines Zahnrad 410, welches Phase ϕ₂ des mit Sendefrequenz f2 gesendeten Reflexionssignals beim Empfangen an Antennenelementen 403 und 404 symbolisiert. Es wird nun anschaulich klar, dass einer bestimmten Kombination von Phasen ϕ₁ und ϕ₂ bzw. auch einer Differenz von Phasen ϕ₁ und ϕ₂ eine bestimmte Entfernung des Objekts entspricht.

Fig. 5 zeigt ein zweidimensionales Phasendiagramm, welches den möglichen P Differenzphasen von -180° bis +180° jeweils eine Entfernung zuordnet. Im Mittelpunkt ist der Standort von Sendeempfänger 51 eingezeichnet. Da für Sendeempfänger 51 nicht unterscheidbar ist, ob die Differenzphase tatsächlich zwischen -180° und +180° liegt oder ob es sich um ein ganzzahliges Vielfaches der erkannten Differenzphase handelt, ist das Verfahren für Entfernungen ab einem frequenzabhängigen Grenzwert nicht mehr eindeutig, da einer erkannten Differenzphase mehrere Entfernungen entsprechen können (siehe auch Fig. 4b).

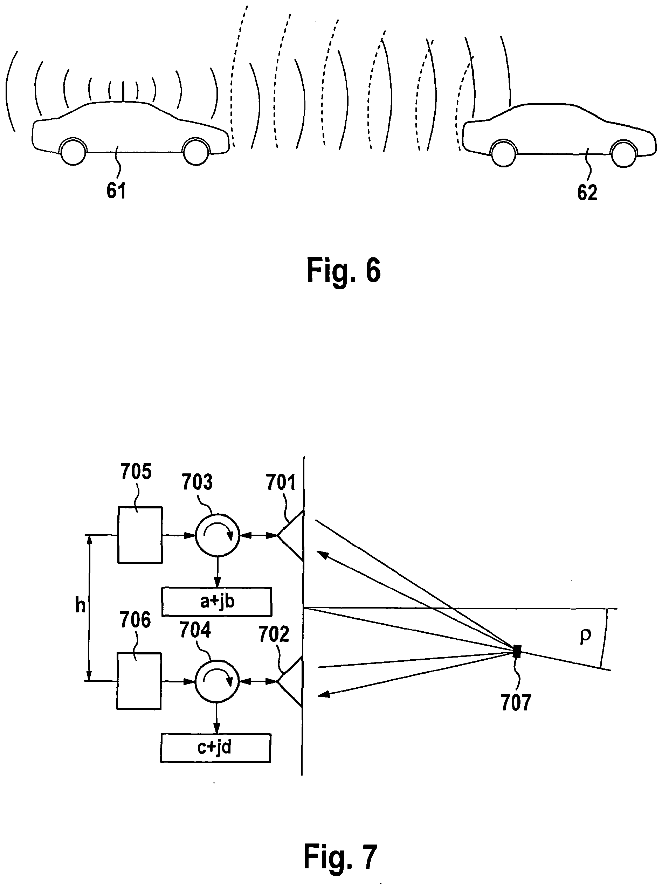

Fig. 6a zeigt zwei Fahrzeuge 61 und 62, wobei Fahrzeug 61 mit der erfindungsgemäßen Vorrichtung ausgestattet ist und das erfindungsgemäße Verfahren ausführt. Die erfindungsgemäße Vorrichtung umfasst dabei einen Sendeempfänger, der mittels WLAN nach 802.11p kommuniziert. Kommunikationssignale, die mittels WLAN nach 802.11p gesendet werden, können in der Regel in bis zu einer Entfernung von 300 m von einem weiteren Sendeempfänger empfangen werden. Der Grund für die begrenzte Reichweite hat dabei folgende Ursache: Je weiter sich das Kommunikationssignal vom Sendeempfänger entfernt, desto geringer ist die Leistung des Kommunikationssignals je Flächeneinheit. Die Leistung je Flächeneinheit fällt mit dem Quadrat der zurückgelegten Entfernung. An Fahrzeug 62 wird derjenige Anteil des Kommunikationssignals, der auf Fahrzeug 62 trifft, als Reflexionssignal anteilig zurückreflektiert in Richtung von Fahrzeug 61. Der Anteil, der von Fahrzeug 62 zurückreflektiert wird, hängt von der Geometrie von Fahrzeug 62 und den Oberflächenmaterialien von Fahrzeug 62 ab. In diesem Fall werden 80 % der auf Fahrzeug 62 auftreffenden Leistung zurückreflektiert. Da auch die Leistung je Flächeneinheit des Reflexionssignals mit dem Quadrat der zurückgelegten Entfernung abnimmt, empfängt Fahrzeug 61 nur noch eine Leistung, die der ursprünglich gesendeten Leistung geteilt durch die vierte Potenz der Entfernung zu Fahrzeug 62 entspricht, zusätzlich abgeschwächt um 20 %, da Fahrzeug 62 nur 80 % der auftreffenden Leistung reflektiert. Die die Sendereichweite von WLAN nach 802.11p etwa 300 m beträgt und Fahrzeug 61 das Reflexionssignal noch empfangen und auswerten können muss, ergibt sich gemäß obiger Zusammenhänge eine leistungsbedingt maximal feststellbare Entfernung von etwa 15 m für Fahrzeug 62 von Fahrzeug 61.

In Fig. 7 ist ein Sendeempfänger einer erfindungsgemäßen Vorrichtung zu sehen, welche mittels des Interferometer-Verfahrens eine Richtung zu einem Objekt feststellt. Die Vorrichtung verfügt über eine zwei Antennenelemente 701 und 702 umfassende Antennenanordnung. Mittels Zirkulatoren 703 und 704 ist der Sendeempfänger in der Lage, über beide Antennenelemente 701 und 702 jeweils gleichzeitig zu empfangen und zu senden. Taktgeber 705 und 706 geben dabei für jedes Antennenelement 701 und 702 eine jeweils identische Sendefrequenz f1 vor. Antennenelemente 701 und 702 sind dabei durch räumlichen Abstand h voneinander getrennt, wobei h knapp der halben Wellenlänge der gesendeten Kommunikationssignale entspricht. Die gesendeten Kommunikationssignale treffen auf Objekt 707 in der Signalausbreitungszone und werden von diesem reflektiert. Die von Antennenelementen 701 und 702 vom Sendeempfänger zu Objekt 707 und zurück zurückgelegte Wegstrecke ist in diesem Fall aufgrund von räumlichem Abstand h leicht unterschiedlich. Da das von Objekt 707 erzeugte Reflexionssignal somit mit unterschiedlichen Phasen von Antennenelementen 701 und 702 erfasst wird, kann aus den Differenzphasen der Winkel ρ bestimmt werden, welcher die Richtung vom Sendeempfänger zum Objekt angibt. Das anhand von Fig. 7 dargestellte Verfahren ist jedoch nur auf 180° eindeutig, da sich Objekt 707 auch unter dem Winkel ρ auf der linken Seiten vom Sendeempfänger befinden könnte (anstatt, wie hier dargestellt, auf der rechten Seite) und hierbei die selbe Differenzphase an Antennenelementen 701 und 702 entstehen würde.

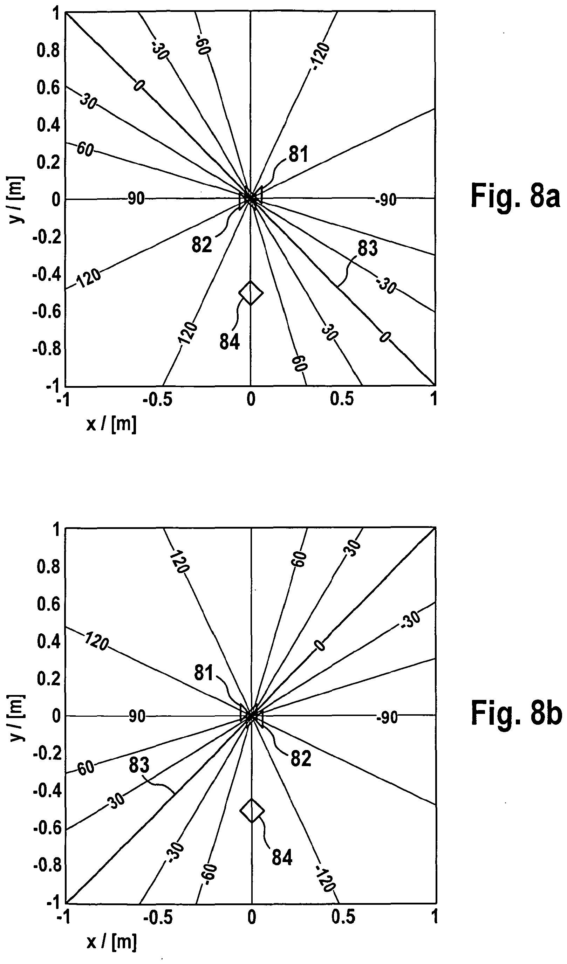

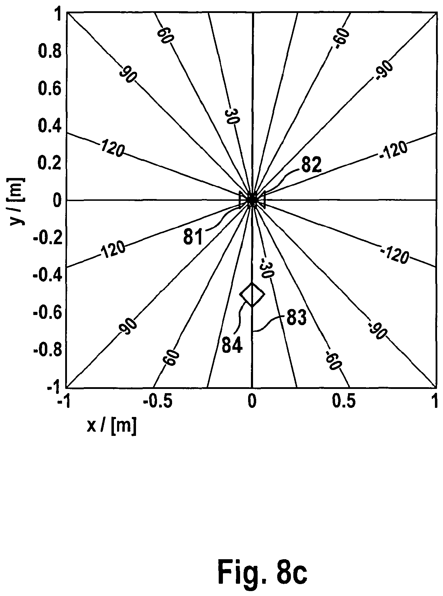

Fig. 8 zeigt schematisch die phasenabhängigen Bestimmungen einer Richtung gemäß dem bereits beschriebenen Interferometer-Verfahren. In Fig. 8a sind zwei Antennenelemente 81 und 82 zu sehen, die räumlich leicht versetzt angeordnet sind. Basislinie 83 entspricht aufgrund der gewählten Ausrichtung bzw. Beabstandung von Antennenelementen 81 und 82 einer Differenzphase von 0°, d.h., dass ein Reflexionssignal, welches von einem Objekt auf einem beliebigen Punkt der Basislinien ausgeht, mit einer Differenzphase von 0° erfasst würde. Weiterhin ist Objekt 84 zu sehen, welches sich in der Zeichnung von Fig. 8a unterhalb von Antennenelementen 81 und 82 bei einer Differenzphase von 90° befindet. Ebenfalls zu erkennen ist in diesem Zusammenhang, dass mittels Antennenelementen 81 und 82 nicht eindeutig feststellbar ist, ob sich Objekt 84 unterhalb oder oberhalb von Antennenelementen 81 und 82 befindet, da beide Positionen zu der erfassten Differenzphase von 90° führen.

In Fig. 8b sind noch einmal Antennenelemente 81 und 82 dargestellt, diesmal jedoch um 90° nach links gedreht. Entsprechend der Ausrichtung und Anordnung von Antennenelementen 81 und 82 ändert sich auch die Ausrichtung von mit 0° gekennzeichneten Basislinie 83. Objekt 84 erscheint dennoch wieder bei einer Differenzphase von 90°.

Auch Fig. 8c zeigt Antennenelemente 81 und 82, wobei diese hier derart ausgerichtet sind, dass mit 0° gekennzeichnete Basislinie 83 senkrecht von oben nach unten verläuft. Entsprechend wird Objekt 84 bei einer Differenzphase von 0° auf der Basislinie erfasst.

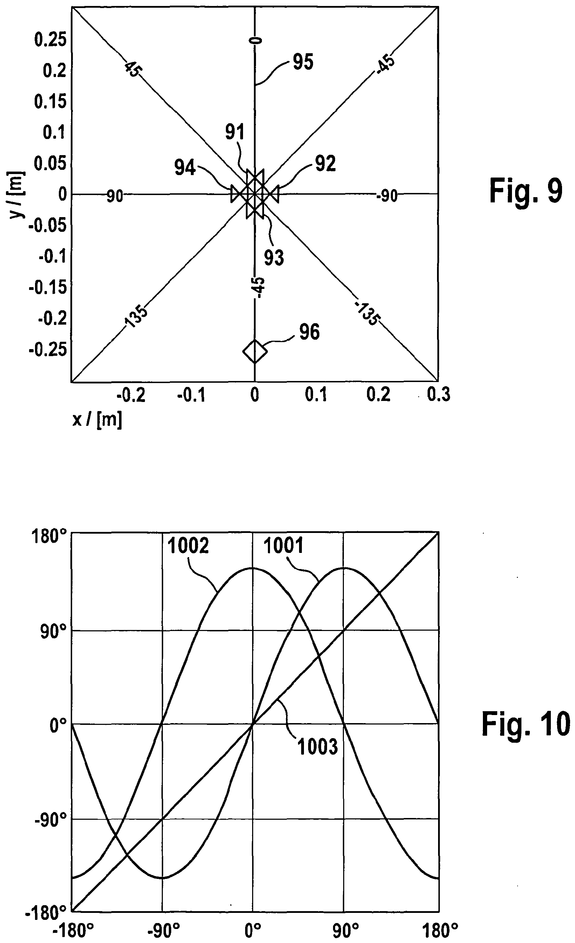

In Fig. 9 ist eine Antennenanordnung dargestellt, die vier Antennenelemente 91, 92, 93 und 94 umfasst, welche kreuzförmig angeordnet sind und dabei einen räumlichen Abstand zueinander aufweisen, der geringer ist als die halbe Wellenlänge der gesendeten Kommunikationssignale. Durch die Verwendung von vier Antennenelementen 91, 92, 93 und 94 wird die in Fig. 8 dargestellte Zweideutigkeit der Richtung beim Interferometer-Verfahren aufgehoben, so dass Objekt 96 eindeutig als unterhalb der Antennenanordnung und auf Basislinie 95 liegend erkannt wird.

Fig. 10 zeigt eine mögliche Interpretation und Auswertung der von vier Antennenelementen 91, 92, 93 und 94 (Fig. 9) erfassten Reflexionssignale zur Bestimmung der Richtung gemäß dem Interferometer-Verfahren. Dabei wird die Differenzphase an einem ersten Paar von Antennenelementen als Sinus-Anteil 1001 und die Differenzphase am zweiten Paar von Antennenelementen als Cosinus-Anteil 1002 interpretiert. Durch Anwendung einer arctan²-Funktion auf Sinus-Anteil 1001 und Cosinus-Anteil 1002 erhält man nun Gerade 1003, die eine auf 360° eindeutige Bestimmung der Richtung zum Objekt ermöglicht.

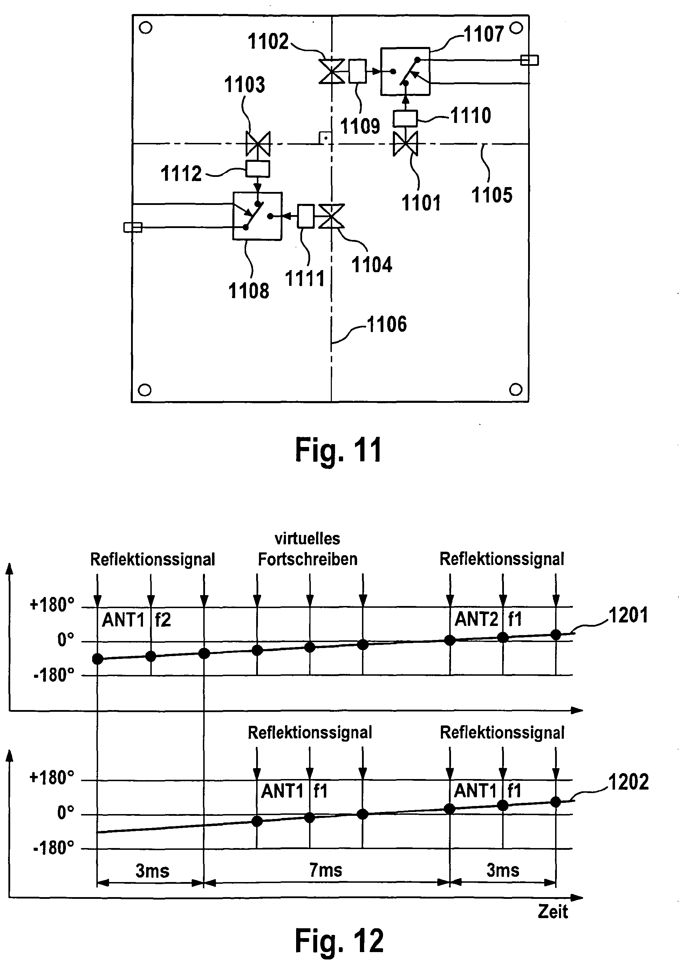

In Fig. 11 ist ein möglicher Aufbau einer Antennenanordnung dargestellt, die vier Antennenelemente 1101, 1102, 1103 und 1104 umfasst und für das Interferometer-Verfahren geeignet ist. Durch die Wahl von vier Antennenelementen entsteht zunächst für jedes Paar von Antennenelementen eine eigene Basislinie 1105 bzw. 1106. Der Abstand von Antennenelemente 1101, 1102, 1103 und 1104 ist kleiner als die halbe Wellenlänge der gesendeten Kommunikationssignale. Antennenelementen 1101, 1102, 1103 und 1104 sind beispielsgemäß als einfache sogenannte λ/4-Dipole mit sogenanntem Balun 1109, 1110, 1111 und 1112 ausgebildet. Umschalter 1107 und 1108 dienen der Auswahl der jeweiligen Basislinie 1105 bzw. 1106, sofern nur ein Paar von Antennenelementen 1101, 1102, 1103 und 1104 zur Bestimmung der Richtung herangezogen werden soll. In diesem Fall kann durch Auswahl des jeweils anderen Paar von Antennenelementen 1101, 1102, 1103 und 1104 die Basislinie gewechselt werden und eine auf 360° eindeutige Bestimmung der Richtung vorgenommen werden. Bei Schaltern 1107 und 1108 handelt es sich um sogenannte SPDT-Schalter (single pull duoble throw).

Fig. 12 zeigt die Bestimmung von zwei Phasen an einer Antennenanordnung, die zwei Antennenelemente umfasst. Die möglichen Werte der Phasen reichen dabei jeweils von -180° bis +180°. Im Zeitfenster t₁, welches eine Dauer von 3 ms aufweist, wird an Antennenelement 1 ein Reflexionssignal mit der Frequenz f2 erfasst. Gleichzeitig wird über Antennenelement 1 mittels eines Zirkulators gesendet. Aus dem empfangenen Reflexionssignal wird Phase 1201 bestimmt. Eine Bestimmung von Phase 1202 ist im Zeitfenster t₂ nicht möglich, da durch einen Umschaltvorgang bedingt Antenne 2 keine vorübergehend keine Signale empfangen kann. Im Zeitfenster t₂, welches 7 ms andauert, findet an Antennenelement 1 ein Frequenzwechsel hin zur Frequenz f1 statt. Mittels der nun an Antennenelement 1 empfangenen Frequenz f1 kann Phase 1202 bestimmt werden. Da jedoch keine Reflexionssignale bei der Frequenz f1 empfangen werden, wird Phase 1201 im Zeitfenster t₂ virtuell fortgeschrieben. Mittels der virtuell fortgeschriebenen Phase bei der Frequenz f2 und der bestimmten Phase bei der Frequenz f1 kann nun eine Differenzphase ermittelt werden, aus welcher über das Vernier-Verfahren die Entfernung zu demjenigen Objekt bestimmt werden kann, das die Reflexionssignale bei den Frequenzen f1 und f2 erzeugt. Im Zeitfenster t₃ empfängt nun Antenne 2 Reflexionssignale bei der Frequenz f1 und Antenne 1 empfängt ebenfalls Reflexionssignale bei der Frequenz f1. Aus der sich aus der räumlichen Beabstandung ergebenden Differenzphase der beiden Antennen wird nun mittels des Interferometer-Verfahrens die Richtung zu dem Objekt bestimmt, das die Reflexionssignale bei Frequenz f1 erzeugt.

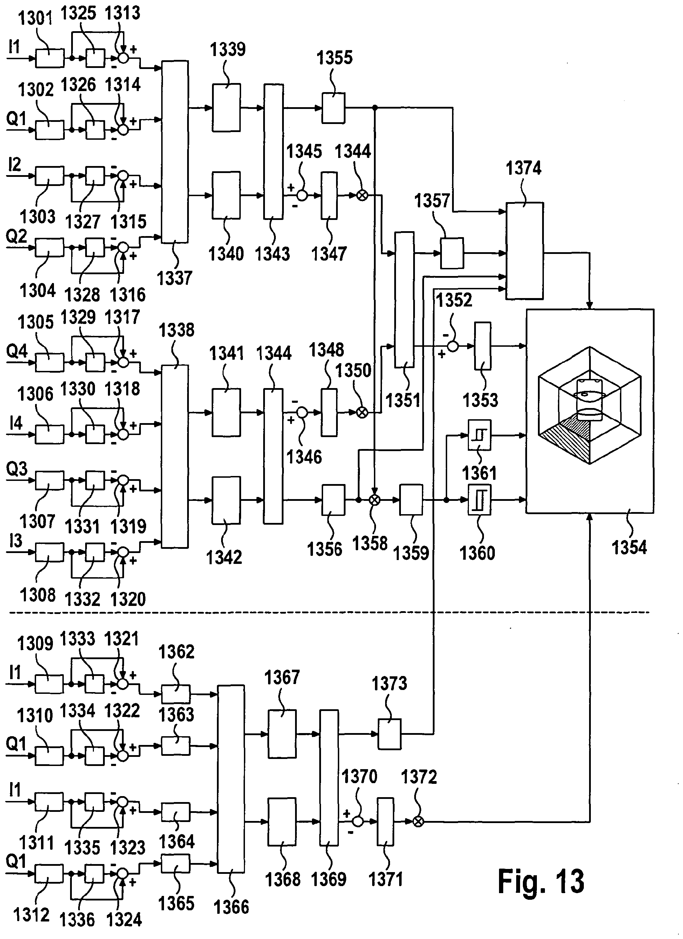

Fig. 13 zeigt einen beispielhaften und schematischen Aufbau einer erfindungsgemäßen Vorrichtung zur Bestimmung einer Entfernung und einer Richtung zu einem Objekt als Blockschaltbild. Dazu werden die Reflexionssignale eines paketbasierten, "gepulst continuous wave" arbeitenden Sendeempfängers ausgewertet. In den Eingangsstufen 1301-1312 werden die analogisierten Anteile I und Q zunächst abgetastet und digitalisiert. Sie enthalten dabei noch einen zufälligen Offset, der sich durch Tiefpassfilterung entfernen lässt. Dies funktioniert, weil der relevante Anteil der Phase, beispielsgemäß die Dopplerphase, sich im Vergleich zur Phase des Signals nur langsam ändert. Die beispielsgemäß gewählte Methode, um den Gleichanteil zu entfernen, ist das Abziehen eines gleitenden Mittelwerts an Subtrahierern 1313-1324, wie er am Ausgang von Tiefpässen 1325-1336 auftritt. Die Auswertung der komplexen Anteile I und Q erfolgt mittels Multiplizierern 1337 und 1338 als paarweise konjugiert komplexes Multiplizieren. Somit werden hier die hochfrequenten Anteile der Phasen entfernt, indem dar z.B. linksherum drehende Anteil Q1 mit dem durch das konjugiert Komplexe rechtsherum drehende Anteil Q2 verarbeitet wird, so dass nur die Dopplerphasendifferenz übrig bleibt. An dieser Stelle wird außerdem derjenige Signalanteil entfernt, der durch die Eigenbewegung des Fahrzeugs auftritt. Dies stellt einen wesentlichen Vorteil des Phasendifferenzverfahrens dar: Es kommen keine Umgebungs-Signale zur Auswertung, die nur etwas mit der Eigenbewegung des Fahrzeugs zu tun haben, weil diese in den erfassten Reflexionssignalen nahezu gleichartig auftreten und durch die Bestimmung der Differenzphase eliminiert werden. Nach diesen Auswerteschritten können die Signale noch nicht sofort an Arcustangensberechner 1343 bzw. 1344 weitergeführt werden, da die Phase definitionsgemäß springt, wenn sie auf den Bereich -180° bis +180° umgebrochen wird. Da die Anteile I und Q zunächst noch als kontinuierlicher Sinus-Anteil bzw. Cosinus-Anteil vorliegen, können sie in dieser Form noch vergleichsweise einfach gefiltert, prädiktiert und beobachtet werden. Entsprechend werden die Anteile I und Q in Filtermodulen 1339-1342 zunächst mittels eines Tiefpasses gefiltert, prädiktiert, d.h., in die Zukunft extrapoliert, und schließlich mittels eines Kalman-Filters ein weiteres Mal gefiltert. Die AnfangsDifferenzphase ist prinzipiell zufällig und abhängig von den verwendeten Leitungslängen, Abständen der Antennenelemente und der relativer Ausrichtung der Antennenelemente. Daher ist es notwendig, die Phasen einmalig aufeinander abzugleichen. Dies geschieht beispielsgemäß mittels Abgleichelementen 1345 und 1346. Da jedes Paar von Antennenelementen (Eingänge I1, I2, Q1, Q2) eine Bestimmung der Richtung nur auf 180° eindeutig vornehmen kann , wird im folgenden der Eindeutigkeitsbereich mittels des zweiten Paares von Antennenelementen (Eingänge 13, 14, Q3, Q4) auf 360° erweitert. Dazu werden die Phasen nun mittels Phasenrichtern 1347 und 1348 auf 360° umgebrochen und anschließend mittels Ausgleichsmodulen 1349 und 1350 mit einer Ausgleichkonstanten versehen, für den Fall, dass die Paare von Antennenelementen nicht exakt gleich weit voneinander beabstandet sind. Darauf folgend wird erneut mittels weiterem Arcustangensberechner 1351 aus den Anteilen I und Q ein Arcustangens gebildet und eine weitere konjugiert komplexe Multiplikation durchgeführt. In diesem Fall werden die Werte I2+jQ2 und I4+jQ4 konjugiert komplex multipliziert. Das Ergebnis der konjugiert komplexe Multiplikation wird mittels weiterem Abgleichselement 1352 ein weiteres mal abgeglichen. Anschließend erfolgt nochmals ein Umbrechen der Phase mittels weiterem Phasenrichter 1353. Das nunmehrige Ergebnis stellt die Richtung zu einem erfassten Objekt dar und wird dem Fahrer in Ausgabemodul 1354 graphisch dargestellt. Wie zu sehen ist, befindet sich das Objekt links hinter dem Fahrzeug.

Die konjugiert komplexe Multiplikation in Arcustangensberechnern 1343, 1344 und 1351 dient zusammen mit Wurzelrechnern 1355, 1356 und 1357 zur Berechnung eines Betrags der jeweiligen Anteile I und Q, der eine Mindestgröße haben muss, um eine sinnvolle Auswertung zu gewährleisten. Übertragen auf die Eingangssignale muss bezüglich der Rauschgrenze des Empfangsmoduls ein Mindestmaß an Störabstand eingehalten werden, wobei zumindest der Betrag der Dopplerfrequenz aufgrund der Filterung in Filtermodulen 1339-1342 auch deutlich kleiner als der Effektivwert des Systemrauschens sein kann. Zugleich eignet sich der so gewonnene Betrag, der einen Grenzwert für die Entfernung angibt, auch für eine grobe Entfernungsabschätzung, da der Betrag des Reflexionssignals mit der vierten Potenz der Entfernung zum Objekt abnimmt. Zur Bildung eines Mittelwerts werden die von Wurzelrechnern 1355 und 1356 gebildeten Werte mittels Multiplizierer 1358 miteinander multipliziert und anschließned erneut mittels Wurzelrechner 1359 die Wurzel dieses Produkts bestimmt. Annäherungsmodul 1360 vergleicht die bestimmten Grenzwerte für die Entfernungen mit vorgegebenen Warnschwellen, während Detektionsmodul 1361 die bestimmten Grenzwerte für die Entfernungen vorgegebenen Detektionsschwellen vergleicht. Die bestimmten Grenzwerte für die Entfernungen hängen dabei wesentlich vom sogenannten Radarquerschnitt des Objekts ab. Sofern sowohl eine Detektionsschwelle als auch eine Warnschwelle überschritten werden, kann dies dem Fahrer in Ausgabemodul 1354 graphisch ausgegeben werden.

Neben der groben Abschätzung der Entfernung über die empfangene Leistung der Reflexionssignale wird im Folgenden noch mittels des Vernier-Verfahrens die genaue Entfernung zum Objekt bestimmt. Dazu werden die Anteile I1 und Q1 vom gleichen Antennenelement, jedoch bei zwei unterschiedlichen Frequenzen, herangezogen. Da beispielsgemäß die zwei unterschiedlichen Frequenzen bzw. die Kommunikationssignale mit diesen zwei unterschiedlichen Frequenzen zeitlich zueinander versetzt gesendet und somit die Reflexionssignale zeitlich zueinander versetzt empfangen werden, verfügt die Vorrichtung über Zwischenspeicher 1362-1365, die erst eine nachfolgende Verarbeitung ermöglichen. Die nachfolgende Verarbeitung umfasst zunächst Multiplizierer 1366, darauf folgend Filtermodule 1367 und 1368 (entsprechend Filtermodulen 1339-1342), Arcustangensberechner 1369 und Abgleichelement 1370. Darauf folgt Phasenrichter 1371 zum Umbrechen der Phase und Ausgleichsmodul 1372. Von diesem wird die bestimmte Entfernung direkt an Ausgabemodul 1354 weitergeführt und dem Fahrer graphisch dargestellt.

Außerdem wird von Wurzelrechner 1373 die Wurzel des Ausgangswerts von Arcustangensberechner 1369 gebildet. Diese Wurzel und die von Wurzelrechnern 1355, 1356 und 1357 gebildeten Wurzeln werden an Diagnosemodul 1374 weitergeleitet. Diagnosemodul 1374 vergleicht diese Wurzeln untereinander und mit einem absoluten Schwellenwert und bestimmt somit einen aktuellen Zustand der erfindungsemäßen Vorrichtung. Dieser Zustand sagt aus, ob und wie zuverlässig die bestimmten Entfernungen und Richtungen sind.

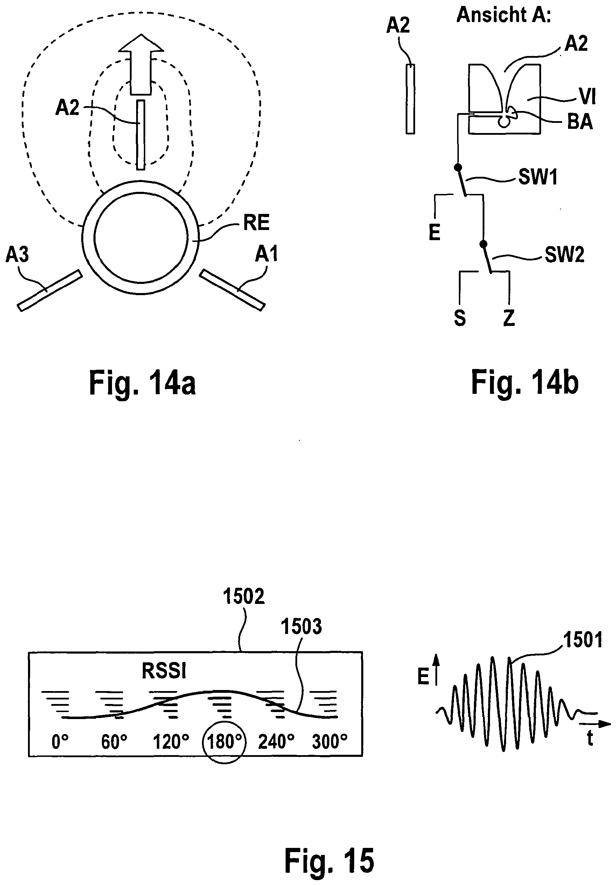

Fig. 14 zeigt eine beispielhafte Ausführungsform eines Antennenmoduls mit sternförmig angeordneten Breitband-Vivaldi-Elementen A1, A2 und A3 sowie zentralem Rohrreflektor RE. Vivaldi-Elemente A1, A2 und A3 sind derart angeordnet, dass zweidimensionales Vivaldi-Horn VI (Fig. 1b) eine Massefläche bildet und mit Reflektor RE leitend verbunden ist. Balun BA ist an seinem Fußpunkt mit steuerbarer Schalterkaskade bestehend aus Schalter SW1 und Schalter SW2 verbunden, wobei Empfänger E aufgrund seiner Nähe zu Vivaldi-Horn VI die geringste Schalterdämpfung erfährt, während regelbarer Sender S und Abschlusswiderstand Z am Ende der Kaskade angeordnet sind und eine entsprechend höhere Schalterdämpfung erfahren.

In Fig. 15 ist eine beispielhafte Richtungsauswertung mittels einer Richtcharakteristik eines empfangenen Reflexionssignals oder Kommunikationssignals dargestellt. Demoduliertes Reflexionssignal 1501 wird in seiner Amplitude mittels sog. "Receive Signal Strength Indicators" (RSSI) 1502 ausgewertet. Es wird eine einfache, sogenannte Hüllkurvendemodulation durchgeführt. Ebenso könnte auch eine Leistungsmessung durchgeführt werden. Für den vergleichsweise aufwändigeren Fall einer Phasenauswertung würden die Reflexionssignal mindestens zweier Antennenelemente zusätzlich durch steuerbare Phasenverzögerer geleitet und anschließend durch Richtkoppler kombiniert. Erst danach würde die RSSI-Auswertung erfolgen.

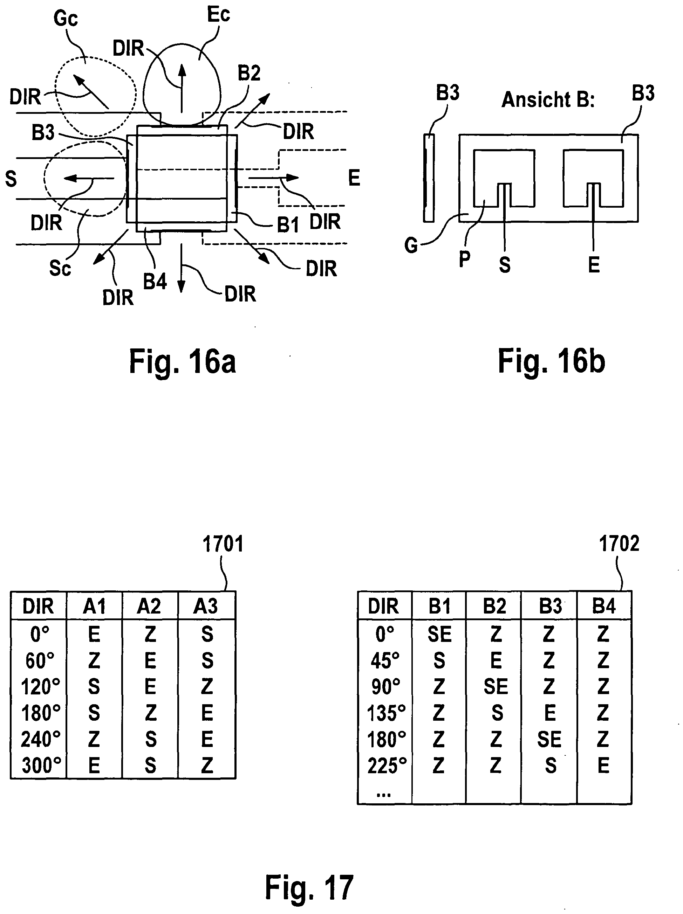

In Fig. 16a ist eine weitere mögliche Ausführungsform einer erfindungsgemäßen Antennenanordnung dargestellt. In dieser Ausführungsform kommen Schmalband Patch-Elemente B1, B2, B3 und B4 zum Einsatz. In diesem Beispiel sind sie für Sendestufe und Empfangsstufe getrennt angeordnet und in vier Raumrichtungen zu den Mantelflächen eines Kubus arrangiert. Einzelnes Patch B3 (Fig. 3b) besteht aus einer metallischen Hinterlage (nicht dargestellt) sowie aus einer Vorderlage mit Schmalband-Patch P für die Sendestufe und die Empfangsstufe. Zumindest die metallische Hinterlage ist mit elektrischer Masse G verbunden. Auch hier sind die Zuleitungen am Fußpunkt mit einer Schalterkaskade (siehe Fig. 14b) verbunden. Im aufwändigeren Fall eines Phasenvergleichs wären die Zuleitungen am Fußpunkt mit steuerbaren Phasenverzögerern, mit einem signalkombinierenden Richtkoppler sowie einem RSSI-Auswertungsmodul verbunden. Entsprechend ihrer Geometrie und Ausformung ergeben sich für die in Fig. 16 dargestellte Antennenanordnung acht unterschiedliche Zuordnungen bzw. Richtcharakteristiken DIR.

In Fig. 17 sind zwei Zuordnungstabellen 1701 und 1702 dargestellt. Zuordnungstabelle 1701 enthält ein Zuordnungs- bzw. Auswerteschema für die in Fig. 14 dargestellte Antennenanordnung, während Zuordnungstabelle 1702 ein Zuordnungs- bzw. Auswerteschema für die in Fig. 16 dargestellte Antennenanordnung enthält. Zuordnungstabelle 1702 umfasst dabei acht unterschiedliche Zuordnungen bzw. Richtcharakteristiken DIR und Zuordnungstabelle 1701 umfasst sechs unterschiedliche Zuordnungen bzw. Richtcharakteristiken DIR. Je nach Zuordnung von Antennenelementen A1, A2, A3 bzw. B1, B2, B3, B4 zu Sendermodul S, Empfängermodul E und Abschlusswiderstand Z gemäß Zuordnungstabelle 1701 bzw. 1702 ergibt sich aus der Kombination aus Sendecharakteristik Sc und Empfangscharakteristik Ec eine kombinierte Richtcharakteristik der Gesamtcharakteristik Gc. Aus einem Maximum (RSSI=max) von RSSI-Verlauf 1503 in Fig. 15 über dem zugeordneten Richtungswinkel DIR folgt dann direkt die Richtung zum Objekt.

Gemäß einem nicht dargestellten Beispiel wird das erfndungsgemäße Verfahren als Schutzverfahren vor einem Eingeparktwerden durch andere Fahrzeuge verwendet. Insbesondere in Großstädten besteht häufig das Problem, dass ein Fahrzeug durch andere Fahrzeuge in einer engen Parklücke eingeparkt wird. Dies kann zum einen über eine funkverbindungsfähige Schließvorrichtungan den Fahrer des gerade eingeparkten Fahrzeugs gemeldet werden, oder aber das eigeparkte Fahrzeug löst eine akustische Warnung aus, um das einparkende Fahrzeug darauf aufmerksam zu machen, dass das eingeparkte Fahrzeug nicht mehr ausparken kann, wenn das einparkende Fahrzeug in seiner jetzigen Position verbleibt. Alternativ zu einer akustischen Warnung kann auch die Scheibenwaschanlage des eingeparkten Fahrzeugs aktiviert werden - in der Regel wird ein einparkender Fahrer aus Gründen der Vorsicht und Sicherheit zu einem derartigen, plötzlich die Scheibenwaschanlage aktivierenden Fahrzeug, einen größeren Abstand halten.

Gemäß einem weiteren ebenfalls nicht dargestellten Beispiel wird das erfindungsgemäße Verfahren als Verfahren zur Erkennung einer Annäherung an das mit der erfindungsgemäßen Vorrichtung versehene Fahrzeug genutzt. In der Regel dauert es nach dem Einsteigen in ein Fahrzeug eine Weile, bis die Fahrzeugelektronik einsatzbereit ist. Der Fahrer soll von dieser Zeitspanne bis zur Einsatzbereitschaft möglichst wenig merken, weshalb der Zeitpunkt der Aktivierung der Fahrzeugelektronik so weit wie möglich nach vorne verlagert wird, z.B. zum Zeitpunkt des Türöffnens. Mit dem erfindungsgemäßen Verfahren kann der Fahrer nun bereits schon bemerkt werden, wenn er sich dem Fahrzeug nähert und die Fahrzeugelektronik kann bereits zu diesem Zeitpunkt aktiviert werden.

Gemäß einem weiteren ebenfalls nicht dargestellten Beispiel wird das erfindungsgemäße Verfahren verwendet, um ausschließlich die Alarmanlage in Einsatzbereitschaft zu versetzen, sofern sich jemand dem Fahrzeug im abgestellten Zustand nähert. Somit kann sogar die Alarmanlage deaktiviert werden, wenn sich niemand in der Nähe des Fahrzeugs befindet.

Gemäß einem weiteren nicht dargestellten Beispiel wird das erfindungsgemäße Verfahren verwendet, um bei Annäherung einer Person an das Fahrzeug im abgestellten Zustand einen Fahrzeugaktuator, wie z.B. einen Fensterheber, kurzzeitig zu aktivieren. Somit entsteht bei der sich nähernden Person der Eindruck, dass der Besitzer des Fahrzeugs in der Nähe ist und die Szenerie beobachtet. Dies beugt Fahrzeugdiebstählen vor.

Gemäß einem weiteren nicht dargestellten Beispiel wird das erfindungsgemäße Verfahren zum Schutz von Zweiradfahrern verwendet: Häufig wird man als Autofahrer im Stop&Go-Verkehr von rechts überholenden Zweiradfahrern überrascht. Diese nähern sich aus einer unerwarteten Richtung meist im toten Winkel, so dass auf sie kaum Rücksicht genommen werden kann. Das erfindungsgemäße Verfahren kann eine solche Annäherung bemerken, noch bevor z.B. Ultraschallsensoren ansprechen, weil der Zweiradfahrer vom Fahrzeugdach aus, wo in der Regel die Antennenanordnung angeordnet ist, zuerst erfasst werden kann.

Gemäß einem weiteren nicht dargestellten Beispiel wird das erfindungsgemäße Verfahren zur sogenannten Totwinkel-Warnung verwendet: Nähert sich ein Fahrzeug im toten Winkel, so wird es mittels des erfindungsgemäßen Verfahrens erfasst und eine entsprechende Warnung in den Außenspiegel eingeblendet.

Gemäß einem weiteren nicht dargestellten Beispiel wird das erfindungsgemäße Verfahren als Abstands-und-Geschwindigkeits-Regler verwendet: Ein vorausfahrendes Fahrzeug wird bei starker Annäherung mittels des erfindungsgemäßen Verfahrens erfasst, daraufhin kann die Geschwindigkeit autonom reduziert werden, um ein Auffahren zu verhindern.

## Patentansprüche

1. Verfahren zur Positionsbestimmung von Objekten (62, 707, 84, 96) mittels Fahrzeug-zu-X-Kommunikationssignalen, bei welchem ein zur drahtlosen Kommunikation befähigter Sendeempfänger eine Fahrzeug-zu-X-Kommunikationseinrichtung ist und Kommunikationssignale sendet, wobei der Sendeempfänger (51) zum gleichzeitigen Senden und Empfangen befähigt ist, wobei die Kommunikationssignale in einer Signalausbreitungszone an mindestens einem Objekt (62, 707, 84, 96) zumindest teilweise als Reflexionssignale reflektiert werden und wobei der Sendeempfänger (51) die Reflexionssignale empfängt, wobei Phaseninformationen der Reflexionssignale und/oder der Kommunikationssignale bestimmt werden,
wobei die Phaseninformationen Differenzphasen der Reflexionssignale sind, die entweder durch ein einzelnes Antennenelement oder mindestens zwei Antennenelemente erzeugt werden,
und
wobei aus den durch das einzelne Antennenelement erzeugten Phaseninformationen eine Entfernung und/oder eine Bewegungsrichtung zum mindestens einen Objekt (62, 707, 84, 96) bestimmt werden, oder wobei aus den durch die mindestens zwei Antennenelemente erzeugten Phaseninformationen eine Entfernung und/oder ein Winkel zum mindestens einen Objekt bestimmt werden.

2. Verfahren nach Anspruch 1,
**dadurch gekennzeichnet, dass** ein empfangenes Reflexionssignal und/oder ein gesendetes Kommunikationssignal in einen vorauseilenden (I) und einen nachlaufenden Anteil (Q) aufgespalten wird, wobei die Phase des vorauseilenden Anteils (I) unbeeinflusst bliebt und die Phase des nachlaufenden Anteils (Q) um 90° verzögert wird.

3. Verfahren nach mindestens einem der Ansprüche 1 bis 2,
**dadurch gekennzeichnet, dass** die Differenzphasen mittels Mischen eines Kommunikationssignals mit einem zugehörigen Reflexionssignal oder mittels Mischen zweier unterschiedlicher Reflexionssignale bestimmt werden, insbesondere mittels konjugiert komplexer Multiplikation und/oder mittels Überkreuz-Multiplikation.

4. Verfahren nach mindestens einem der Ansprüche 1 bis 3,
**dadurch gekennzeichnet, dass** der Sendeempfänger (51) Kommunikationssignale auf mindestens zwei unterschiedlichen Frequenzen (f1, f2) sendet.

5. Verfahren nach Anspruch 4,
**dadurch gekennzeichnet, dass** aus den durch die mindestens zwei unterschiedlichen Frequenzen (f1, f2) erzeugten Phaseninformationen eine Entfernung zum Objekt bestimmt wird (62, 707, 84, 96).

6. Verfahren nach mindestens einem der Ansprüche 4 und 5,
**dadurch gekennzeichnet, dass** die mindestens zwei Frequenzen (f1, f2) zwei unterschiedliche Kommunikationskanäle eines gemeinsamen Kommunikationsmittels sind.

7. Verfahren nach mindestens einem der Ansprüche 1 bis 6,
**dadurch gekennzeichnet, dass** die Kommunikationssignale und die Reflexionssignale mittels mindestens zwei elektrisch unabhängiger Antennenelemente (101, 403, 404, 701, 702, 81, 82, 91, 92, 93, 94, 1101, 1102, 1103, 1104, A1, A2, A3, B1, B2, B3, B4) des Sendeempfängers (51) empfangen werden, wobei insbesondere die Phaseninformationen mittels der mindestens zwei Antennenelemente (101, 403, 404, 701, 702, 81, 82, 91, 92, 93, 94, 1101, 1102, 1103, 1104, A1, A2, A3, B1, B2, B3, B4) bestimmt werden.

8. Verfahren nach Anspruch 7,
**dadurch gekennzeichnet, dass** die Kommunikationssignale und die Reflexionssignale mittels vier elektrisch unabhängiger Antennenelemente (101, 403, 404, 701, 702, 81, 82, 91, 92, 93, 94, 1101, 1102, 1103, 1104, A1, A2, A3, B1, B2, B3, B4) des Sendeempfängers (51) empfangen werden, wobei insbesondere die Phaseninformationen mittels der vier Antennenelemente (101, 403, 404, 701, 702, 81, 82, 91, 92, 93, 94, 1101, 1102, 1103, 1104, A1, A2, A3, B1, B2, B3, B4) bestimmt werden.

9. Verfahren nach mindestens einem der Ansprüche 7 und 8,
**dadurch gekennzeichnet, dass** aus den durch die mindestens zwei Antennenelemente erzeugten Phaseninformationen eine Richtung zum Objekt bestimmt wird (62, 707, 84, 96).

10. Verfahren nach mindestens einem der Ansprüche 1 bis 4, 6, 8 oder 9,
**dadurch gekennzeichnet, dass** die Richtung und die Entfernung zum Objekt (62, 707, 84, 96) mittels zeitlich abwechselnder Auswertung der Differenzphasen von zwei Frequenzen (f1, f2) und der Differenzphasen an zwei Antennenelementen (101, 403, 404, 701, 702, 81, 82, 91, 92, 93, 94, 1101, 1102, 1103, 1104, A1, A2, A3, B1, B2, B3, B4) bestimmt werden.

11. Verfahren nach mindestens einem der Ansprüche 1 bis 10,
**dadurch gekennzeichnet, dass** der Sendeempfänger (51) mit Kommunikationsteilnehmern (62), insbesondere mit Verkehrsteilnehmern (62), und mit Infrastruktureinrichtungen, kommuniziert.

12. Verfahren nach mindestens einem der Ansprüche 1 bis 11,
**dadurch gekennzeichnet, dass** die Objekte (62, 707, 84, 96) Verkehrsteilnehmer (62), insbesondere Fahrzeuge (62), Radfahrer und Fußgänger, Infrastruktureinrichtungen und Kommunikationsteilnehmer sind.

13. Verfahren nach mindestens einem der Ansprüche 1 bis 12,
**dadurch gekennzeichnet, dass** der Sendeempfänger (51) für das mindestens eine Objekt (62, 707, 84, 96) in der Signalausbreitungszone jeweils eine Dopplerfrequenz bestimmt.

14. Verfahren nach Anspruch 13,
**dadurch gekennzeichnet, dass** die Dopplerfrequenz aus einer Dopplerphase bestimmt wird.

15. Verfahren nach mindestens einem der Ansprüche 13 und 14,
**dadurch gekennzeichnet, dass** die Dopplerfrequenz mittels eines Tiefpasses (116, 117, 300, 303, 327, 1325, 1326, 1327, 1328, 1329, 1330, 1331, 1332, 1333, 1334, 13335, 1336, 1339, 1340, 1341, 1342), insbesondere mittels eines digitalen Tiefpasses (116, 117, 300, 303, 327, 1325, 1326, 1327, 1328, 1329, 1330, 1331, 1332, 1333, 1334, 13335, 1336, 1339, 1340, 1341, 1342), gefiltert wird.

16. Verfahren nach mindestens einem der Ansprüche 1 bis 15,
**dadurch gekennzeichnet, dass** aus einer Vielzahl von bestimmten Entfernungen und Richtungen ein Bewegungspfad des mindestens einen Objekts (62, 707, 84, 96) erstellt wird.

17. Verfahren nach mindestens einem der Ansprüche 1 bis 16,
**dadurch gekennzeichnet, dass** in den empfangenen Kommunikationssignalen transportierte Daten (51) zumindest anteilig ausgewertet werden.

18. Verfahren nach mindestens einem der Ansprüche 1 bis 17,
**dadurch gekennzeichnet, dass** eine bestimmte Position eines Kommunikationsteilnehmers mit einer in einer vom Kommunikationsteilnehmer gesendeten Botschaft enthaltenen Positionsangabe abgeglichen wird und die Positionsangabe validiert wird, wenn sie der bestimmten Position nicht widerspricht.

19. Verfahren nach mindestens einem der Ansprüche 17 oder 18,
**dadurch gekennzeichnet, dass** die transportierten Daten und/oder die bestimmten Positionen an mindestens ein Fahrerassistenzsystem (104) weitergeführt werden.

20. Verfahren nach Anspruch 19,
**dadurch gekennzeichnet, dass** das Fahrerassistenzsystem (104) zur Ausführung eines autonomen Bremseneingriffs und/oder eines autonomen Lenkeingriffs und/oder einer Bewarnung eines Fahrers ausgebildet ist und insbesondere ein Abstands- und Geschwindigkeitsregler ist.

21. Verfahren nach mindestens einem der Ansprüche 1 bis 20,
**dadurch gekennzeichnet, dass** der Sendeempfänger (51) Kommunikationssignale ohne Informationsinhalt sendet und/oder Kommunikationssignale, deren Informationsinhalt unverändert gültig ist, mehrfach aufeinander folgend sendet.

22. Verfahren nach mindestens einem der Ansprüche 1 bis 21,
**dadurch gekennzeichnet, dass** eine Empfangsleistung des Reflexionssignals ausgewertet wird.

23. Verfahren nach Anspruch 22,
**dadurch gekennzeichnet, dass** aus der Entfernung und der Empfangsleistung eine Gattung des mindestens einen Objekts (62, 707, 84, 96) bestimmt wird.

24. Verfahren nach mindestens einem der Ansprüche 1 bis 23,
**dadurch gekennzeichnet, dass** die Entfernung und/oder die Richtung zum Objekt (62, 707, 84, 96) zusätzlich aus einem aus einer von den mindestens zwei Antennenelementen (101, 403, 404, 701, 702, 81, 82, 91, 92, 93, 94, 1101, 1102, 1103, 1104, A1, A2, A3, B1, B2, B3, B4) empfangenen elektromagnetischen Feldstärke gebildeten Verhältnis bestimmt wird.

25. Vorrichtung zur kommunikationssignalbasierten Positionsermittlung von Objekten (62, 707, 84, 96),
umfassend einen Sendeempfänger (51), welcher eine Fahrzeugzu-X-Kommunikationseinrichtung ist, mit einem Sendemodul (100) zum drahtlosen Senden von Kommunikationssignalen und mit einem Empfangsmodul (102) zum drahtlosen Empfangen von Kommunikationssignalen und Reflexionssignalen, wobei die Reflexionssignale an Objekten (62, 707, 84, 96) in einer Ausbreitungszone der Kommunikationssignale zumindest teilweise reflektiert werden, wobei der Sendeempfänger (51) zum gleichzeitigen Senden und Empfangen befähigt ist und wobei der Sendeempfänger (51) eine Antennenanordnung umfasst **dadurch gekennzeichnet, dass** die Vorrichtung mittels Phasenauswertemitteln (1337, 1338, 1366) Phaseninformationen der Reflexionssignale und/oder der Kommunikationssignale bestimmt und dazu konfiguriert ist, ein Verfahren nach mindestens einem der Ansprüche 1 bis 24 auszuführen.

26. Vorrichtung nach Anspruch 25,
**dadurch gekennzeichnet, dass** die Vorrichtung aus den Phaseninformationen mittels Entfernungsbestimmungsmitteln (1368, 1369, 1371) eine Entfernung und/oder mittels Richtungsbestimmungsmitteln (1340, 1343, 1347, 1341, 1344, 1348) eine Richtung zum mindestens einen Objekt (62, 707, 84, 96) bestimmt.

27. Vorrichtung nach mindestens einem der Ansprüche 25 und 26,
**dadurch gekennzeichnet, dass** die Antennenanordnung eine Richtcharakteristik zur Bestimmung einer Einlaufrichtung der Kommunikationssignale und/oder der Reflexionssignale aufweist.

28. Vorrichtung nach mindestens einem der Ansprüche 25 bis 27,
**dadurch gekennzeichnet, dass** die Antennenanordnung aus mindestens zwei Antennenelementen (101, 403, 404, 701, 702, 81, 82, 91, 92, 93, 94, 1101, 1102, 1103, 1104, A1, A2, A3, B1, B2, B3, B4) besteht.

29. Vorrichtung nach mindestens einem der Ansprüche 25 bis 28,
**dadurch gekennzeichnet, dass** die Antennenelemente (101, 403, 404, 701, 702, 81, 82, 91, 92, 93, 94, 1101, 1102, 1103, 1104, A1, A2, A3, B1, B2, B3, B4) über Schaltelemente (SW1, SW2) dem Sendemodul (100, S) und/oder dem Empfangsmodul (102, E) und/oder einem Abschlusswiderstand (Z) zuordenbar sind und dass die Richtcharakteristik von der Zuordnung geprägt ist.

30. Vorrichtung nach mindestens einem der Ansprüche 25 bis 29,
**dadurch gekennzeichnet, dass** die Antennenelemente (101, 403, 404, 701, 702, 81, 82, 91, 92, 93, 94, 1101, 1102, 1103, 1104, A1, A2, A3, B1, B2, B3, B4) zu einem mehrstrahligen Stern und/oder einem Vieleck, insbesondere einem Viereck, angeordnet sind und/oder als Vivaldi-Hörner oder als Schmalband-Patch-Elemente ausgeformt sind und/oder einen metallischen Rohrreflektor strahlenförmig umgeben und/oder in Rücken-an-Rücken-Anordnung ausgerichtet sind.

31. Verwendung der Vorrichtung nach mindestens einem der Ansprüche 25 bis 30 in einer Infrastruktureinrichtung und/oder einem Verkehrsteilnehmer, insbesondere einem Kraftfahrzeug (61, 62) und/oder einem Motorrad und/oder einem Fahrrad und/oder einem Pedelec und/oder einem Fußgänger.

## Claims

1. Method for position determination of objects (62, 707, 84, 96) by means of vehicle-to-x communication signals, in which a transceiver capable of wireless communication is a vehicle-to-x communication device and transmits communication signals, wherein the transceiver (51) is capable of simultaneous transmission and reception, wherein the communication signals are at least partially reflected as reflection signals on at least one object (62, 707, 84, 96) in a signal propagation zone and wherein the transceiver (51) receives the reflection signals,
wherein phase information of the reflection signals and/or the communication signals is determined, wherein
the phase information comprises differential phases of the reflection signals which are generated either by an individual antenna element or at least two antenna elements, and
a distance and/or movement direction to the at least one object (62, 707, 84, 96) is/are determined from the phase information generated by the individual antenna element, or wherein a distance and/or an angle to the at least one object is/are determined from the phase information generated by the at least two antenna elements.

2. Method according to Claim 1,
**characterized in that** a received reflection signal and/or a transmitted communication signal is split up into a leading (I) and a trailing component (Q), wherein the phase of the leading component (I) remains unaffected and the phase of the trailing component (Q) is delayed by 90°.

3. Method according to at least one of Claims 1 and 2,
**characterized in that** the differential phases are determined by means of mixing of a communication signal with an associated reflection signal or by means of mixing of two different reflection signals, in particular by means of complex conjugate multiplication and/or by means of crossover multiplication.

4. Method according to at least one of Claims 1 to 3,
**characterized in that** the transceiver (51) transmits communication signals on at least two different frequencies (f1, f2).

5. Method according to Claim 4,
**characterized in that** a distance to the object (62, 707, 84, 96) is determined from the phase information generated by the at least two different frequencies (f1, f2).

6. Method according to at least one of Claims 4 and 5,
**characterized in that** the at least two frequencies (f1, f2) are two different communication channels of a common communication means.

7. Method according to at least one of Claims 1 to 6,
**characterized in that** the communication signals and the reflection signals are received by at least two electrically independent antenna elements (101, 403, 404, 701, 702, 81, 82, 91, 92, 93, 94, 1101, 1102, 1103, 1104, A1, A2, A3, B1, B2, B3, B4) of the transceiver (51), wherein, in particular, the phase information is determined by means of the at least two antenna elements (101, 403, 404, 701, 702, 81, 82, 91, 92, 93, 94, 1101, 1102, 1103, 1104, A1, A2, A3, B1, B2, B3, B4).

8. Method according to Claim 7,
**characterized in that** the communication signals and the reflection signals are received by means of four electrically independent antenna elements (101, 403, 404, 701, 702, 81, 82, 91, 92, 93, 94, 1101, 1102, 1103, 1104, A1, A2, A3, B1, B2, B3, B4) of the transceiver (51), wherein, in particular, the phase information is determined by means of the four antenna elements (101, 403, 404, 701, 702, 81, 82, 91, 92, 93, 94, 1101, 1102, 1103, 1104, A1, A2, A3, B1, B2, B3, B4).

9. Method according to at least one of Claims 7 and 8,
**characterized in that** a direction to the object (62, 707, 84, 96) is determined from the phase information generated by the at least two antenna elements.

10. Method according to at least one of Claims 1 to 4,6,8 or 9,
**characterized in that** the direction and the distance to the object (62, 707, 84, 96) are determined by means of temporally alternating evaluation of the differential phases of two frequencies (f1, f2) and the differential phases on two antenna elements (101, 403, 404, 701, 702, 81, 82, 91, 92, 93, 94, 1101, 1102, 1103, 1104, A1, A2, A3, B1, B2, B3, B4).

11. Method according to at least one of Claims 1 to 10,
**characterized in that** the transceiver (51) communicates with communication participants (62), in particular with traffic participants (62), and with infrastructure devices.

12. Method according to at least one of Claims 1 to 11,
**characterized in that** the objects (62, 707, 84, 96) are traffic participants (62), in particular vehicles (62), cyclists and pedestrians, infrastructure devices and communication participants.

13. Method according to at least one of Claims 1 to 12,
**characterized in that** the transceiver (51) in each case determines a Doppler frequency for the at least one object (62, 707, 84, 96) in the signal propagation zone.

14. Method according to Claim 13,
**characterized in that** the Doppler frequency is determined from a Doppler phase.

15. Method according to at least one of Claims 13 and 14,
**characterized in that** the Doppler frequency is filtered by means of a low-pass filter (116, 117, 300, 303, 327, 1325, 1326, 1327, 1328, 1329, 1330, 1331, 1332, 1333, 1334, 1335, 1336, 1339, 1340, 1341, 1342), in particular by means of a digital low-pass filter (116, 117, 300, 303, 327, 1325, 1326, 1327, 1328, 1329, 1330, 1331, 1332, 1333, 1334, 1335, 1336, 1339, 1340, 1341, 1342).

16. Method according to at least one of Claims 1 to 15,
**characterized in that** a movement path of the at least one object (62, 707, 84, 96) is produced from a multiplicity of determined distances and directions.

17. Method according to at least one of Claims 1 to 16,
**characterized in that** data (51) transported in the received communication signals is at least proportionally evaluated.

18. Method according to at least one of Claims 1 to 17,
**characterized in that** a determined position of a communication participant is aligned with a position datum contained in a message sent by the communication participant and the position datum is validated if it does not conflict with the determined position.

19. Method according to at least one of Claims 17 and 18,
**characterized in that** the transported data and/or the determined positions are forwarded to at least one driver assistance system (104).

20. Method according to Claim 19,
**characterized in that** the driver assistance system (104) is designed to carry out an autonomous braking intervention and/or an autonomous steering intervention and/or a warning of a driver, and is, in particular, a distance and speed regulator.

21. Method according to at least one of Claims 1 to 20,
**characterized in that** the transceiver (51) transmits communication signals without information content and/or transmits communication signals of which the information content remains valid in multiple succession.

22. Method according to at least one of Claims 1 to 21,
**characterized in that** a receive power of the reflection signal is evaluated.

23. Method according to Claim 22,
**characterized in that** a class of the at least one object (62, 707, 84, 96) is determined from the distance and the receive power.

24. Method according to at least one of Claims 1 to 23,
**characterized in that** the distance and/or the direction to the object (62, 707, 84, 96) is additionally determined from a ratio formed from an electromagnetic field strength received by the at least two antenna elements (101, 403, 404, 701, 702, 81, 82, 91, 92, 93, 94, 1101, 1102, 1103, 1104, A1, A2, A3, B1, B2, B3, B4).

25. Device for the communication-signal-based position determination of objects (62, 707, 84, 96) which comprises a transceiver (51), which is a vehicle-to-x communication device, with a transmit module (100) for the wireless transmission of communication signals and with a receive module (102) for the wireless reception of communication signals and reflection signals, wherein the reflection signals are at least partially reflected on objects (62, 707, 84, 96) in a propagation zone of the communication signals, wherein the transceiver (51) is capable of simultaneous transmission and reception, and wherein the transceiver (51) comprises an antenna arrangement,
**characterized in that** the device determines phase information of the reflection signals and/or the communication signals by means of phase evaluation means (1337, 1338, 1366) and is configured to carry out a method according to at least one of Claims 1 to 24.

26. Device according to Claim 25,
**characterized in that** the device determines from the phase information a distance by means of distance determination means (1368, 1369, 1371) and/or a direction to the at least one object (62, 707, 84, 96) by means of direction determination means (1340, 1343, 1347, 1341, 1344, 1348).

27. Device according to at least one of Claims 25 and 26,
**characterized in that** the antenna arrangement has a directional characteristic for determining an incoming direction of the communication signals and/or the reflection signals.

28. Device according to at least one of Claims 25 to 27,
**characterized in that** the antenna arrangement consists of at least two antenna elements (101, 403, 404, 701, 702, 81, 82, 91, 92, 93, 94, 1101, 1102, 1103, 1104, A1, A2, A3, B1, B2, B3, B4).

29. Device according to at least one of Claims 25 to 28,
**characterized in that** the antenna elements (101, 403, 404, 701, 702, 81, 82, 91, 92, 93, 94, 1101, 1102, 1103, 1104, A1, A2, A3, B1, B2, B3, B4) are assignable via switching elements (SW1, SW2) to the transmit module (100, S) and/or to the receive module (102, E) and/or to a terminal resistor (Z) and that the directional characteristic is defined by the assignment.

30. Device according to at least one of Claims 25 to 29,
**characterized in that** the antenna elements (101, 403, 404, 701, 702, 81, 82, 91, 92, 93, 94, 1101, 1102, 1103, 1104, A1, A2, A3, B1, B2, B3, B4) are arranged into a multi-beam star and/or a polygon, in particular a rectangle, and/or are shaped as Vivaldi horns as narrowband patch elements and/or surround a metal tube reflector radially and/or are aligned in a back-to-back arrangement.

31. Use of the device according to at least one of Claims 25 to 30 in an infrastructure device and/or a traffic participant, in particular a motor vehicle (61, 62) and/or a motorcycle and/or a bicycle and/or a pedelec and/or a pedestrian.

## Revendications

1. Procédé de positionnement d'objets (62, 707, 84, 96) au moyen de signaux de communication de véhicule-vers-X, procédé dans lequel un émetteur-récepteur apte à la communication sans fil est un dispositif de communication de véhicule-vers-X et émet des signaux de communication, l'émetteur-récepteur (51) étant capable d'émettre et de recevoir simultanément, les signaux de communication étant au moins partiellement réfléchis dans une zone de propagation de signal par au moins un objet (62, 707, 84, 96) en tant que signaux de réflexion, et l'émetteur-récepteur (51) recevant les signaux de réflexion, des informations de phase des signaux de réflexion et/ou des signaux de communication étant déterminés,
les informations de phase étant des phases différentielles des signaux de réflexion générés soit par un élément d'antenne unique soit par au moins deux éléments d'antenne, et
une distance et/ou une direction de déplacement par rapport à l'au moins un objet (62, 707, 84, 96) étant déterminées à partir des informations de phase générées par l'élément d'antenne unique, ou une distance et/ou un angle par rapport à au moins un objet étant déterminés à partir des informations de phase générées par les au moins deux éléments d'antenne.

2. Procédé selon la revendication 1,
**caractérisé en ce qu'**un signal de réflexion reçu et/ou un signal de communication émis est divisé en une composante d'avance (I) et une composante de retard (Q), la phase de la composante d'avance (I) restant non affectée et la phase de la composante de retard (Q) étant retardée de 90°.

3. Procédé selon l'une au moins des revendications 1 et 2,
**caractérisé en ce que** les phases différentielles sont déterminées par mélange d'un signal de communication avec un signal de réflexion associé ou par mélange de deux signaux de réflexion différents, notamment par multiplication complexe conjuguée et/ou par multiplication croisée.

4. Procédé selon l'une au moins des revendications 1 à 3,
**caractérisé en ce que** l'émetteur-récepteur (51) émet des signaux de communication sur au moins deux fréquences différentes (f1, f2) .

5. Procédé selon la revendication 4,
**caractérisé en ce que** la distance par rapport à l'objet est déterminée (62, 707, 84, 96) à partir des informations de phase générées par au moins deux fréquences différentes (f1, f2).

6. Procédé selon l'une au moins des revendications 4 et 5,
**caractérisé en ce que** les au moins deux fréquences (f1, f2) sont deux canaux de communication différents d'un moyen de communication commun.

7. Procédé selon l'une au moins des revendications 1 à 6,
**caractérisé en ce que** les signaux de communication et les signaux de réflexion sont reçus au moyen d'au moins deux éléments d'antenne électriquement indépendants (101, 403, 404, 701, 702, 81, 82, 91, 92, 93, 94, 1101, 1102, 1103, 1104, A1, A2, A3, B1, B2, B3, B4) de l'émetteur-récepteur (51), les informations de phase étant en particulier déterminées au moyen d'au moins deux éléments d'antenne (101, 403, 404, 701, 702, 81, 82, 91, 92, 93, 94, 1101, 1102, 1103, 1104, A1, A2, A3, B1, B2, B3, B4).

8. Procédé selon la revendication 7,
**caractérisé en ce que** les signaux de communication et les signaux de réflexion sont reçus au moyen de quatre éléments d'antenne électriquement indépendants (101, 403, 404, 701, 702, 81, 82, 91, 92, 93, 94, 1101, 1102, 1103, 1104, A1, A2, A3 , B1, B2, B3, B4) de l'émetteur-récepteur (51), les informations de phase étant notamment déterminées au moyen des quatre éléments d'antenne (101, 403, 404, 701, 702, 81, 82, 91, 92, 93, 94, 1101, 1102, 1103, 1104, A1, A2, A3, B1, B2, B3, B4).

9. Procédé selon l'une au moins des revendications 7 et 8,
**caractérisé en ce que** la direction de l'objet est déterminée à partir des informations de phase générées par les au moins deux éléments d'antenne (62, 707, 84, 96).

10. Procédé selon l'une au moins des revendications 1 à 4, 6, 8 ou 9,
**caractérisé en ce que** la direction et la distance par rapport à l'objet (62, 707, 84, 96) sont déterminées par évaluation alternative dans le temps des phases différentielles de deux fréquences (f1, f2) et des phases différentielles au niveau de deux éléments d'antenne (101, 403, 404, 701, 702, 81, 82, 91, 92, 93, 94, 1101, 1102, 1103, 1104, A1, A2, A3, B1, B2, B3, B4) .

11. Procédé selon l'une au moins des revendications 1 à 10,
**caractérisé en ce que** l'émetteur-récepteur (51) communique avec des participants à la communication (62), en particulier avec des usagers de la route (62), et avec des équipements d'infrastructure.

12. Procédé selon l'une au moins des revendications 1 à 11,
**caractérisé en ce que** les objets (62, 707, 84, 96) sont des usagers de la route (62), en particulier des véhicules (62), des cyclistes et des piétons, des équipements d'infrastructure et des participants à la communication.

13. Procédé selon l'une au moins des revendications 1 à 12,
**caractérisé en ce que** l'émetteur-récepteur (51) détermine une fréquence Doppler pour l'au moins un objet (62, 707, 84, 96) se trouvant dans la zone de propagation de signal.

14. Procédé selon la revendication 13,
**caractérisé en ce que** la fréquence Doppler est déterminée à partir d'une phase Doppler.

15. Procédé selon l'une au moins des revendications 13 et 14,
**caractérisé en ce que** la fréquence Doppler est filtrée au moyen d'un filtre passe-bas (116, 117, 300, 303, 327, 1325, 1326, 1327, 1328, 1329, 1330, 1331, 1332, 1333, 1334, 13335, 1336, 1339, 1340, 1341, 1342), notamment au moyen d'un filtre passe-bas numérique (116, 117, 300, 303, 327, 1325, 1326, 1327, 1328, 1329, 1330, 1331, 1332, 1333, 1334, 13335, 1336, 1339, 1340 , 1341, 1342).

16. Procédé selon l'une au moins des revendications 1 à 15,
**caractérisé en ce qu'**un chemin de déplacement de l'au moins un objet (62, 707, 84, 96) est établi à partir d'une pluralité de distances et de directions spécifiques.

17. Procédé selon l'une au moins des revendications 1 à 16,
**caractérisé en ce que** des données (51) transportées dans les signaux de communication reçus sont évaluées au moins proportionnellement.

18. Procédé selon l'une au moins des revendications 1 à 17,
**caractérisé en ce qu'**une position déterminée d'un participant à la communication est comparée à une indication de position contenue dans un message envoyé par le participant à la communication et l'indication de position est validée si elle ne contredit pas la position déterminée.

19. Procédé selon l'une au moins des revendications 17 ou 18,
**caractérisé en ce que** les données transportées et/ou les positions déterminées sont transmises à au moins un système d'aide à la conduite (104).

20. Procédé selon la revendication 19,
**caractérisé en ce que** le système d'aide à la conduite (104) est conçu pour exécuter une intervention de freinage autonome et/ou une intervention de direction autonome et/ou un avertissement du conducteur et en particulier un réglage de distance et de vitesse.

21. Procédé selon l'une au moins des revendications 1 à 20,
**caractérisé en ce que** l'émetteur-récepteur (51) émet des signaux de communication sans contenu informationnel et/ou émet plusieurs fois successivement des signaux de communication dont le contenu informationnel est valide sans changement.

22. Procédé selon l'une au moins des revendications 1 à 21,
**caractérisé en ce que** la puissance de réception du signal de réflexion est évaluée.

23. Procédé selon la revendication 22,
**caractérisé en ce que** le genre de l'au moins un objet (62, 707, 84, 96) est déterminé à partir de la distance et de la puissance de réception.

24. Procédé selon l'une au moins des revendications 1 à 23,
**caractérisé en ce que** la distance et/ou la direction par rapport à l'objet (62, 707, 84, 96) sont déterminés en plus à partir d'un rapport formé à partir d'une intensité de champ électromagnétique reçue par les au moins des deux éléments d'antenne (101, 403, 404, 701, 702, 81, 82, 91, 92, 93, 94, 1101, 1102, 1103, 1104, A1, A2, A3, B1, B2, B3, B4).

25. Dispositif de détection de position d'objets (62, 707, 84, 96) sur la base d'un signal de communication,
le dispositif comprenant un émetteur-récepteur (51), qui est un dispositif de communication véhicule-vers-X, pourvu d'un module d'émission (100) destiné à l'émission sans fil de signaux de communication et d'un module de réception (102) destiné à la réception sans fil de signaux de communication et de signaux de réflexion, les signaux réfléchis étant au moins partiellement réfléchis par des objets (62, 707, 84, 96) se trouvant dans une zone de propagation des signaux de communication, l'émetteur-récepteur (51) étant capable d'émettre et de recevoir simultanément, et l'émetteur-récepteur (51) comprenant un ensemble d'antennes,
**caractérisé en ce que** le dispositif détermine des informations de phase des signaux de réflexion et/ou des signaux de communication à l'aide de moyens d'évaluation de phase (1337, 1338, 1366) et est configuré pour mettre en oeuvre un procédé selon l'une au moins des revendications 1 à 24.

26. Dispositif selon la revendication 25,
**caractérisé en ce que** le dispositif détermine à partir des informations de phase une distance à l'aide de moyens de détermination de distance (1368, 1369, 1371) et/ou une direction par rapport à au moins un objet (62, 707, 84, 96) à l'aide de moyens de détermination de direction (1340, 1343, 1347, 1341, 1344, 1348).

27. Dispositif selon l'une au moins des revendications 25 et 26,
**caractérisé en ce que** l'ensemble d'antennes présente une caractéristique directionnelle destinée à déterminer une direction d'entrée des signaux de communication et/ou des signaux de réflexion.

28. Dispositif selon l'une au moins des revendications 25 à 27,
**caractérisé en ce que** l'ensemble d'antennes comprend au moins deux éléments d'antenne (101, 403, 404, 701, 702, 81, 82, 91, 92, 93, 94, 1101, 1102, 1103, 1104, A1, A2, A3, B1, B2, B3, B4).

29. Dispositif selon l'une au moins des revendications 25 à 28,
**caractérisé en ce que** les éléments d'antenne (101, 403, 404, 701, 702, 81, 82, 91, 92, 93, 94, 1101, 1102, 1103, 1104, A1, A2, A3, B1, B2, B3, B4) peuvent être associés au module d'émission (100, S) et/ou au module de réception (102, E) et/ou à une résistance de terminaison (Z) par le biais d'éléments de commutation (SW1, SW2) et **en ce que** la caractéristique directionnelle est marquée par l'association.

30. Dispositif selon l'une au moins des revendications 25 à 29,
**caractérisé en ce que** les éléments d'antenne (101, 403, 404, 701, 702, 81, 82, 91, 92, 93, 94, 1101, 1102, 1103, 1104, A1, A2, A3, B1, B2, B3, B4) sont disposés de manière à former une étoile à plusieurs branches et/ou un polygone, en particulier un quadrilatère, et/ou sont formés en cornets de Vivaldi ou en éléments en plaquette à bande étroite et/ou entourent radialement un réflecteur à tube métallique et/ou sont orientés dos à dos.

31. Utilisation du dispositif selon l'une au moins des revendications 25 à 30 dans un équipement d'infrastructure et/ou un usager de la route, notamment un véhicule automobile (61, 62) et/ou une moto et/ou un vélo et/ou un cycle Pedelec et/ou un piéton.
